# FASCICULE DE BREVET EUROPEEN

(11) **EP 0 574 303 B1**
(45) Date de publication et mention de la délivrance du brevet: **10.02.1999**
(21) Numéro de dépôt: 93401459.8
(22) Date de dépôt: 08.06.1993
(51) Int. Cl.: G06F 9/46

(54) **Système de traitement transactionnel entre un serveur informatique et une pluralité de stations de travail**
Transaktionsverarbeitungssystem zwischen einem Anbieter und mehreren Arbeitsplätzen
Transaction processing system between a server and a plurality of workstations

(30) Priorité: 09.06.1992 FR 9206933
(43) Date de publication de la demande: 15.12.1993
(73) Titulaire: BULL S.A., 78430 Louveciennes (FR)
(72) Inventeur: Li, Jianzhong, F-92290 Chatenay-Malabry (FR); Abdelmoumni, Mohammed, F-75018 Paris (FR); Brunon, Jean-Philippe, F-75018 Paris (FR)
(74) Mandataire: Debay, Yves

(56) Documents cités:
- EP-A- 0 178 235
- WO-A-92/07324

## Description

La but de la présente invention est de faire collaborer les agents (humains ou automatiques) d'une unité organisationnelle (par exemple un département) à travers des procédures (définies à l'aide du formalisme ICN - Information Control Net), et de suivre et contrôler l'avancement des exécutions (matérialisé par des ouvrages) de procédures. Les procédures sont définies en concordance avec les objectifs de l'unité organisationnelle. Les procédures définissent le séquencement des étapes auxquelles un ou plusieurs agents doivent intervenir ou contribuer pour atteindre l'objectif visé par la procédure.

L'architecture proposée permet également d'élargir le champ d'application des systèmes multi-tâches à toutes sortes d'applications sans préjuger au préalable de l'application, seul le découpage des procédures est effectué selon des règles définies liées à la forme de l'architecture.

Ce but de l'invention est obtenu par le fait que le système de traitement transactionnel entre un serveur informatique et une pluralité de stations de travail entre lesquelles sont exécutés les ouvrages qui correspondent à des activités constituant des procédures, le système comportant du côté serveur :
- un module administrateur,
- un module ordonnanceur des ouvrages qui s'appuyent sur la définition des procédures (à savoir les précédences entre les activités d'une procédure) mémorisées dans la base de données relationnelle pour ordonnancer l'avancement des ouvrages en trouvant la ou les activités suivantes et en créant la ou les tâches correspondantes étant donnée la fin d'une activité,
- un module répartiteur pour effectuer la répartition des tâches qui s'appuyent sur la relation entre rôle et acteur mémorisée dans la base de données relationnelle pour attribuer une tâche à un acteur choisi éventuellement selon la charge de travail,
- un module signaleur pour conserver une trace des événements rythmés et recevant des informations de l'ordonnanceur et d'un module coordinateur,
- une boîte de messages échangeant des signaux d'une part avec les modules répartiteur et signaleur, et d'autre part avec un module de communication avec les stations de travail et
- un module de gestion des données du flux de travail,
le système comportant du côté station de travail :
- une couche de communication,
- une couche de gestion des messages correspondant au flux de travail,
- une couche comportant différents jeux d'interfaces de programmation de l'application,
- une couche de services de gestion et
- une couche d'interface utilisateur.

Selon une autre particularité les différents modules d'une couche de la station de travail n'ont pas d'interaction entre eux.

Selon une autre particularité le module de gestion des données gère des tables statiques et dynamiques mémorisées dans la base de données relationnelle.

Selon une autre particularité les tables statiques sont constituées des données de définition des procédures, de définition des activités, de l'organisation des acteurs et des rôles et de répartition des activités selon une table de distribution.

Selon une autre particularité les tables dynamiques sont constituées de données évolutives représentant l'avancement des ouvrages et des tâches.

Selon une autre particularité les tables dynamiques sont constituées d'une table de circulation, d'une table de vecteurs de données d'ouvrage JDV-JDV, d'une table de vecteurs de données d'activité ADV-ADV et des tables SCHED-STATEP, SCHED-STATUSP, SCHED-JOBS, SCHED-TASKP.

Selon une autre particularité, les tables statiques sont constituées d'une table de description de procédure (SCHED-PROCEDURE), d'une table de description de données de procédure (JDV-PDDEF), d'une table de description des références des données stockées dans des bases de données externes (EDA-ORA), d'une table de description des activités (SCHED-ACTIVITE), d'une table de définition des précédences (SCHED-PRECEDENCE), des tables de définition de l'organisation du système (ORGA-ACTOR, ORGA-ROLE, ORGA-R-OFF-ACT).

Selon une autre particularité, une activité est constituée d'un identifieur de l'activité, et de la procédure à laquelle l'activité est rattachée et d'une liste d'actions comportant une commande d'initialisation et une commande de validation.

Selon une autre particularité, les actions sont constituées d'une information formant le type, d'un nom, d'argument constitué par les données des vecteurs JDV ou ADV.

Selon une autre particularité la couche de service de gestion comporte :
- un service de gestion de création d'ouvrage,
- un service de gestion d'administration et de coordination,
- un service de gestion de l'exécution de l'activité.

Selon une autre particularité, une activité comporte également un préfixe PR destiné à appeler un logiciel de présentation et d'interaction fournissant l'interface de l'activité.

Selon une autre particularité, le module administrateur réalise les fonctions de modélisation, création, test et accord des différentes entités du système.

Selon une autre particularité, le module de gestion de données a pour fonction d'attacher les données appropriées aux ouvrages spécifiques en créant le vecteur JDV, de gérer l'intégrité des données, de retrouver et accéder les données dans les bases de données externes (ou d'application).

Selon une autre particularité, le module de gestion d'exécution d'activités comporte les fonctions:
- de lecture du fichier et de description d'activité,
- de lecture et d'écriture des données d'ouvrage utilisées dans l'activité,
- de lecture et d'écriture des données des tâches correspondantes utilisées dans l'activité et de commande des droits d'accès sur les données d'ouvrage,
- d'avancement du formulaire de présentation approprié de l'activité,
- et de l'exécution des actions correspondantes à l'activité d'une façon guidée.

Selon une autre particularité, le module de gestion des tâches réalise les fonctions suivantes :
- réception d'une tâche offerte,
- acceptation d'une tâche offerte,
- recherche des données correspondantes du vecteur d'ouvrage sur le serveur,
- achèvement d'une tâche,
- restitution du vecteur d'ouvrage et mise à jour au serveur,
- réorientation d'une tâche vers un autre acteur ou une autre activité,
- appel de l'exécution de l'activité d'une tâche,
- traitement et maintien local des données correspondant aux tâches et leur historique.

Selon une autre particularité le module administrateur et coordinateur (11) comporte les fonctions d'édition de concept et de données et la commande des ouvrages.

Selon une autre particularité, le module répartiteur réalise trois fonctions principales :
- affecter à un utilisateur les tâches qui viennent d'être créées par l'ordonnanceur,
- affecter un nouvel utilisateur à une tâche qui vient d'être rejetée,
- effectuer la distribution et la circulation des activités parmi les utilisateurs.

Selon une autre particularité, le module signaleur conserve une trace des événements rythmés et comporte une fonction de rappel quand un temps est expiré et une fonction de retardement pour lancer un travail avec un retard.

Selon une autre particularité, la boîte de messages est constituée de deux tables de données, une première qui contient la description des messages et une seconde qui mémorise la destination des messages.

D'autres particularités et avantages de la présente invention apparaîtront plus clairement à la lecture de la description ci-après faite en référence aux figures ci-après dans lesquelles :

La figure 1 représente de façon schématique un système de traitement transactionnel selon l'invention.

La figure 2 représente de façon schématique les échanges entre les différents modules du système de traitement transactionnel,

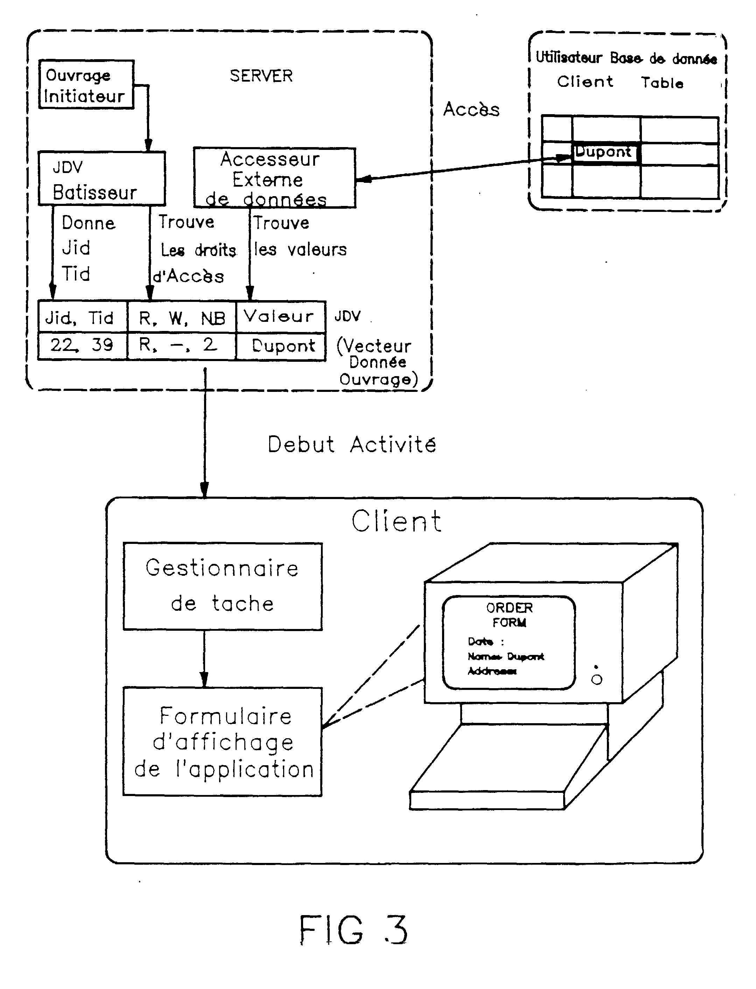

La figure 3 représente les informations qui transitent lors de la création d'un ouvrage entre les différents éléments du système transactionnel.

La figure 4 représente l'écran affiché par le terminal du système lors de la mise en route de celui-ci avec l'interface de présentation particulière.

Les figures 5 à 15 représentent les différentes fenêtres utilisées par l'interface utilisateur du système transactionnel.

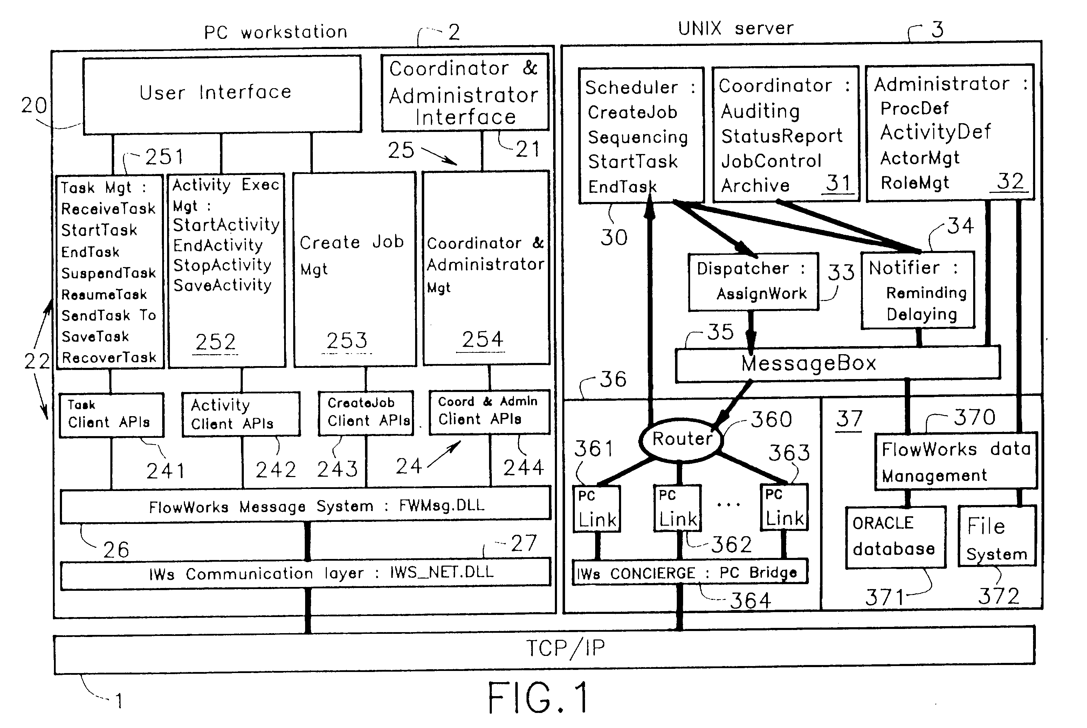

La figure 1 représente un système de traitement transactionnel entre un serveur informatique (3) utilisant des données de traitement stockées sur une base de données relationnelle d'un serveur informatique (3), par exemple du type "UNIX", et communiquant avec des stations de travail (1), par exemple du type PC, sur lesquelles le travail d'une application qui se déroule dans le cadre d'activités est exécutée par l'utilisateur de la station de travail.

Le serveur (3) comporte un jeu de modules (30 à 37) qui initialisent et coordonnent les activités. Par activité on doit entendre le corps d'une étape de travail, d'une procédure, c'est à dire une unité de base de travail qui doit être un jeu séquentiel d'actions primitives exécutées par un seul acteur.

Les activités peuvent fonctionner selon un des trois modes suivants : automatique, manuel et mixte.

Le corps d'une activité constitue la partie d'exécution d'une activité. Ce corps comporte une liste d'actions à exécuter sur la station de travail. L'ordre de ces actions n'est pas fixé et dépend de l'interruption de l'acteur exécutant. Un corps d'activité comporte un identifieur et une liste d'actions Ai. Le couple [ProcedureId, ActivityId] de l'annexe 1 identifie uniquement un corps d'activité lié à l'activité (ActivityId) qui appartient à la procédure dont l'identité est (ProcedureId). Une action N peut être activée par l'utilisateur à travers le formulaire correspondant de l'écran de la station de travail (1). Cette action peut être scindée en deux parties : une première partie Ai qui est une commande (PreScript) à exécuter quand l'utilisateur veut sélectionner une action N (par exemple une initialisation) et une deuxième partie Zi qui est la commande (PostScript) à exécuter quand l'utilisateur veut valider l'action sélectionnée.

Les actions d'une activité sont numérotées de O à N. L'action AO est une action particulière dans laquelle la commande (PreScript) de sélection est automatiquement exécutée et validée avant toute autre action.

Le préfixe PR de l'activité appelle un formulaire qui fournit l'interface de présentation et d'interaction de l'activité sur l'écran de la station.

La structure des données de l'activité est fournie par un fichier dont le nom est précédé du préfixe ADV. La syntaxe d'une action est constituée d'un champ "type d'action" (ActionType) d'un champ "nom d'action" (ActionName) et de plusieurs arguments qui sont des champs de vecteurs de données d'ouvrage (JDV) représentés par Ji et de vecteurs de données d'activité (ADV) représentés par Ai, ces champs sont stockés dans les vecteurs (ADV, JDV) de la mémoire (370) du serveur (3). Les actions peuvent être du type : exécutable, fonction DLL, échanges DDE... Le système de traitement transactionnel aide à définir, exécuter, coordonner et commander le flux de travail entre les organisations ou les groupes de travail en se basant sur une description des tâches de bureau qui peuvent être décrites comme des tâches structurées récurrentes, appelées procédures dont les éléments de travail de base sont appelés activités et doivent être exécutées par différents individus appelés acteurs selon une certaine séquence.

Un acteur consiste en une identification unique de l'acteur (usrid) fournie par le système, un nom d'acteur (name), un prénom de l'acteur (firstName), un mot unique d'ouverture de cession (loginName), un mot de passe (password) et une étiquette (alias).

Une procédure est un jeu prédéfini d'étapes de travaux selon un séquencement partiel de ces étapes. Une étape de travail est formée d'une en-tête (identification, précédence,etc...) et d'un corps (activité) qui constitue le travail actuel à exécuter. Différentes étapes d'une procédure peuvent être exécutées par différentes personnes, différents groupes de personnes. Dans certains cas, plusieurs étapes d'une procédure peuvent être exécutées en même temps ou dans un ordre quelconque. En général, une procédure est un jeu partiellement ordonné d'étapes, c'est à dire dans lequel toutes les étapes ne doivent pas être nécessairement exécutées séquentiellement et dans lequel des boucles sont autorisées, plutôt qu'un jeu totalement ordonné. Les procédures ont de façon classique des attributs tels que le nom et la personne responsable associée à la procédure.

Un script est une spécification d'une procédure, d'une activité ou d'une partie automatique d'une activité manuelle.

Un ouvrage (job) est le lieu de commande pour une exécution particulière d'une procédure. Dans certains contextes l'ouvrage est appelé une transaction. Les ouvrages ont des paramètres tels que l'état, l'initiateur, l'historique.

Un rôle (role) consiste en la désignation d'un acteur ou d'un groupe d'acteurs qui agissent comme base pour les commandes d'accès et les commandes d'exécution. Un acteur peut jouer plusieurs rôles d'acteur (Role Of Actor) dans une organisation. Un acteur est une personne, un programme ou une entité qui peut remplir les rôles à exécuter et être responsable de ces rôles ou être associé dans une certaine mesure avec les activités et procédure. Les attributs ou possibilités d'accès peuvent être associés avec les acteurs et avec les rôles.

Un rôle est défini par : un mot unique (rid) d'identification du rôle, le nom du rôle (name) et la description du rôle. Le rôle d'acteur comprend : l'identification de l'acteur (usrid) et l'identification du rôle (rid).

D'autres paramètres ou attributs et structures peuvent être associés pour créer un modèle organisationnel, destiné à mieux gérer le flux de travail.

L'architecture au niveau du logiciel de traitement transactionnel du flux de travail constituant le système se décompose en un certain nombre de modules (30 à 37 figure 1). Les modules deviennent actifs quand un ouvrage (job) et/ou une activité (activity) est commencé ou achevé. Un module ordonnanceur (30) est activé par un message d'achèvement d'activité, une exception d'activité ou la création d'un ouvrage.

Dans tous les cas, l'ouvrage est démarré par un processus quelconque qui envoie un message du type créer un ouvrage au module ordonnanceur (30) du serveur (3). Les paramètres de ce message comportent la priorité de l'ouvrage, le temps d'expiration, le nom de la procédure et les paramètres d'initialisation.

L'ordonnanceur (30), à travers la faculté de création d'ouvrage, crée l'ouvrage, lui affecte un nombre unique, fixe l'information d'état pour cet ouvrage et effectue différentes initialisations.

Le travail de finalisation est aussi exécuté par l'ordonnanceur (30) à travers la facilité d'achèvement d'ouvrage quand toutes les activités pour un ouvrage ont été exécutées. L'ordonnanceur vérifie tous les prédécesseurs de tous les possibles successeurs d'une activité achevée.

Si l'activité achevée était une activité de décision, alors l'ordonnanceur examine la variable résultant de cette activité. Si un ou plusieurs successeurs sont validés, un message est envoyé à un module répartiteur (33) avec lequel l'ordonnanceur dialogue. L'ordonnanceur consiste en une boucle de programme représentée à l'annexe 2, consistant à lire les messages reçus et à traiter le cas du message.

L'appel de la fonction "WFsvSchedCreateJob" déclenche la vérification que l'état de publication de la procédure est valide et dans l'affirmative crée un nouvel ouvrage pour la procédure identifiée par son identifieur de procédure (pid) avec une priorité déterminée.

L'appel d'une part de la fonction "WFsvSchedStartTask" déclenche la lecture de la table de définition de la procédure avec initialisation d'une tâche et d'autre part de la fonction "WFsvSchedEndTask" déclenche l'achèvement de la tâche avec chargement du vecteur JDV dans le serveur (3).

Le module ordonnanceur dialogue avec un module répartiteur (dispatcher 33) et un module signaleur (34) (notifier). L'ordonnanceur marque les nouvelles tâches qui sont crées avec l'état "todispatch" et notifie ceci au répartiteur en déposant un message dans une boite à message (35).

Le module répartiteur (33) a trois fonctions principales:
a) affecter à un utilisateur les tâches qui viennent d'être crées par l'ordonnanceur;
b) affecter un nouvel utilisateur à une tâche qui vient d'être rejetée;
c) effectuer la distribution et la circulation d'une activité parmi les utilisateurs.

Le module répartiteur (33) est le premier module qui conduit et est conduit par l'acteur et les entités de rôles. Dans sa troisième fonction, pour une activité donnée, le répartiteur (33) établit une correspondance avec un rôle et avec un ou plusieurs acteurs. Si un ou plusieurs acteurs doivent être sélectionnés comme receveur, alors le répartiteur applique les algorithmes de répartition de base effectuant une répartition linéaire, c'est à dire le répartiteur range aléatoirement les receveurs possibles (acteurs) et procède linéairement à travers cette liste. Il délivre le premier ouvrage au premier acteur, le second ouvrage au second acteur et ainsi de suite jusqu'à l'épuisement de la liste. Ceci est ensuite répété continuellement, de façon que tous les acteurs reçoivent approximativement le même nombre d'ouvrage.

Dans la première fonction, lorsqu'une première tâche est attribuée, l'état de la tâche dans la table (sched-job) est indiqué "OFFERED" et un message est envoyé à l'utilisateur supposé exécuter l'ouvrage.
dans sa deuxième fonction, lorsqu'un utilisateur rejette une tâche qu'il ne peut exécuter l'état de la tâche est mis à "rejected" dans la table (sched-job) et le répartiteur reçoit un message. Le répartiteur mémorise alors le fait que la tâche a été rejetée et par qui, dans les archives et l'historique de vérification (auditing) et procède comme si la tâche provenait de l'ordonnanceur.

Les interfaces de programmation de l'application correspondant à ces trois fonctions sont indiquées dans l'annexe (3).

Le module signaleur (34) conserve une trace des événements rythmés et signale les receveurs corrects au moment approprié.

Deux utilitaires de rythme sont prévus dans le module signaleur (34), à savoir la faculté de rappel et la faculté de retardement. Le premier pour, par exemple, permettre d'imposer une butée limite pour l'exécution d'une activité spécifique et envoyer un message d'avertissement quand le temps de butée est expiré, tandis que le second permet de retarder l'expédition d'un message pendant une certaine période de temps pour, par exemple, demander à un acteur de faire un certain travail après un certain retard.

Le signaleur (34) reçoit également des informations du coordinateur (31) qui prend soin de ce qui se passe dans le système de gestion du flux de travail. Le coordinateur fournit les facilités de contrôle de gestion interne pour garder une trace des événements significatifs et stocker les fichiers de journal affranchis, les façons d'interroger le système sur les différents états (qui fait quoi ? quel est le degré d'avancement d'un ouvrage spécifique ? combien d'ouvrage sont en cours d'exécution ? temps moyen d'exécution d'un ouvrage, temps moyen d'exécution d'une tâche, historique des ouvrages, état courant d'un ouvrage, informations obtenues par un ouvrage déterminé, files pour exécuter une activité donnée au- cours d'une procédure donnée, conflits dans un ouvrage donné, etc...) la possibilité d'agir sur l'avancement des ouvrages (suspension, remise en service (resume), annulation (cancel), réattribution (reassign) etc..) et les moyens de garder un historique par archivage.

Le répartiteur (33) et le signaleur (34) échangent des signaux avec la boite à messages (35) qui sert à conserver tous les messages asynchrones. Ces messages peuvent être des activités assignées à des acteurs, des messages d'avertissement générant chez le signaleur (34), des messages entre acteurs, etc...

La boite à messages est constituée essentiellement dans une base de données relationnelle telle que par exemple la base (e.g. ORACLE de Bull). Le serveur de la boite à message est un serveur particulier qui gère et mémorise les messages asynchrones.

Quand une requête de client est asynchrone, le résultat est mémorisé en tant que message dans la boite à messages à travers le serveur de la boite à messages. La seule façon d'accéder à la boite à messages est à travers le serveur de boite de messages (35). Ainsi par exemple, quand le répartiteur (33) assigne une tâche à un acteur, un message est envoyé à cet acteur l'informant qu'un sujet de travail est arrivé. Ceci est effectué par le serveur de la boite de messages qui écrit dans la boite de messages un message du type "offre de tache (offer-task)".

Le serveur de boite de messages est constitué principalement d'une boucle de programme qui est représente en annexe 4.

La boite de messages est constituée principalement de deux tables de données d'une base de données relationnelle (371) telle que par exemple "ORACLE". La première appelée MSG-BOX-DESC qui contient la description des messages tels que un identifieur unique, le type, etc... La seconde table est appelée MSG-BOX-BROADCAST qui est utilisée pour mémoriser les destinataires des messages et les autres informations telles que les états de messages. Il est important de noter qu'un message peut être adressé à plusieurs destinataires et qu'en conséquence la deuxième table MSG-BOX-BROADCAST devrait contenir la liste des destinataires tandis que la description du message est écrite une seule fois dans la table MSG-BOX-DESC.

Enfin un message peut avoir un des trois status suivants :
TO-READ : qui signifie que le message est disponible,
READ : qui signifie que le message a été lu,
TO-DELETE : qui signifie que le message a été effacé.

Enfin cette boite à messages (35) reçoit également des signaux de l'administrateur (32). Ce module est utilisé en mode différé pour modeler, créer, tester et accorder les différentes entités du système de base, les procédures, activités, rôles et acteurs.

Cette étape peut impliquer l'analyse des structures organisationnelles, des flux d'informations et des procédures de bureau. Les activités "formulaires" et "structures de sécurités" doivent être crées.

Les scénaris de procédures sont écrits par exemple, en utilisant le formalisme d'un logiciel de création d'un réseau de commande d'information ICN (Information Control Net) est décrit dans une autre demande de brevet déposée. Les corps d'activités sont écrits en utilisant une notation fondée sur une base visuelle. Les corps d'activités sont un des véhicules des échanges de données entre les activités du gestionnaire de transaction relationnelles et les différents serveurs extérieurs.

Le système comporte également un module de gestion des données (370) qui stocke les tables relationnelles dans la base de données telle que ORACLE pour représenter les définitions, les relations, les attributs de toutes les procédures, activités, ouvrages, rôles et acteurs.

Ces tables sont constituées de tables dynamiques marquées par un astérisque et de tables statiques.

Les tables dynamiques sont constituées par les tables SCHED-JOBS, SCHED-STATEP représentée en annexe 8, SCHED-STATUSP représentée en annexe 8, SCHED-TASKP, JDV-JDV et ADV-ADV représentée en annexe 5. Ces tables ont leurs rangées insérées et mise à jour pendant la phase d'exécution de l'ordonnanceur. Normalement il y a un jeu de tables dynamiques pour chaque procédure exécutée sur le système.

Un jeu de table contient toutes les données d'exécution pour tous les ouvrages d'une procédure.

Les tables statiques sont constituées par les tables ORGA-ACTOR, ORGA-ROLES, ORGA-R-OFF-ACT, SCHED-PROCEDURES, SCHED-ACTIVITIES, SCHED-PRECEDENCES représentée en annexe 8, JDV-PDDEF (Procédure data definition) représentée en annexe 6, EDA-ORA (external data accessor to ORACLE) représenté en annexe 7. Ces tables statiques contiennent les informations sur les procédures et l'organisation des actions et des rôles.

L'ordonnanceur accède à ces tables seulement dans le mode de lecture et se fie à ces informations qu'il mémorise pour l'exécution.

Toutes les tables dynamiques comportent une colonne indiquant l'identificateur de procédure Pid à laquelle les données contenues dans les tables sont affectées. Une colonne nom Jid d'ouvrage est ajoutée à la table SCHED-JOBS et elle sera remplie de façon optionnelle par l'utilisateur à l'initialisation d'un ouvrage.

Les informations concernant les données utilisées pour attribuer et répartir les tâches et rôles à l'utilisateur comporte une colonne RoleId dans la table SCHED-TASKP qui sera remplie au moment de la création de la tâche par l'ordonnanceur à partir des informations trouvées dans la table SCHED-ACTIVITIES.

Enfin une table distribution et une table circulation représentées aux annexes 4 et 8 permettent au répartiteur de disposer des éléments pour affecter les activités aux différentes stations des utilisateurs.

Avec la table de distribution et le réseau de commande d'informations, il est possible de décrire la circulation d'informations dans un bureau. La distribution décrit la circulation d'une activité entre les différents membres de l'organisation.

La table de distribution comme représentée en annexe 4 comporte un identifieur de distribution Did, un identifieur de procédure (Pid), un identifieur d'activité (Aid), l'information rôle (RoleId), l'information d'identification de l'utilisateur (UserId), une information indiquant que l'identifiant d'utilisateur est au début de la liste de circulation (First) et une information nouvel utilisateur (Next UserId).

La table de circulation est constituée comme représentée en annexe 4 des informations Did, Pid, JobId, Aid pour l'identifieur d'activité, RoleId, UserId, First, Next UserId.

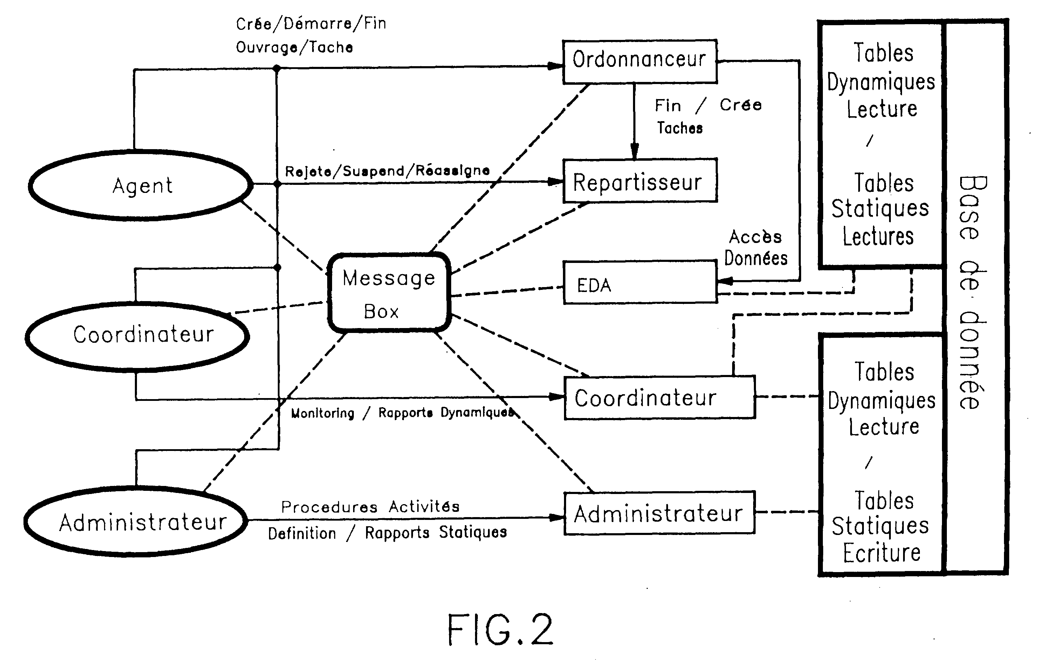

La figure 2 représente l'organisation logique des services rendus par un ou plusieurs modules, et leurs interactions avec l'agent utilisateur du système transactionnel qui est l'administrateur, le coordinateur et l'agent.

La table JDV-JDV est constituée comme représentée à l'annexe 5 d'un identifieur d'ouvrage (Jid), d'un identifieur d'activité (Aid), d'un identifieur de tâches (Tid), d'un identifieur de champs dans le vecteur JDV, d'un état (STATUS) qui peut être l'une des valeurs TO-ACCESS, READFWK, READEXTERN, ARCHIVED, d'un identifieur de champs FLD-NAME, d'un mode de passe de champs PASSMODE qui peut avoir les valeurs VALUE ou REF pour indiquer que le champ est transmis par une valeur ou par sa référence, d'un type de champs (FLD TYPE) qui peut être une date, un caractère ou un entier, d'une longueur en octet de la valeur transmise contenue dans LENGTH, de la valeur du champ si le type de champ est une date contenue dans FLD-DATE, de la valeur du champ si le type de champ est un caractère ou si le mode de passage est REF contenu dans FLD-KCHAR, de la valeur du champ si le mode de passage est INT contenu dans FLD-INT et de la valeur actuelle du champ désignée dans JDV-PDDEF comme champ de dépendance dans ACCESS-KEY.

De plus, la base de données relationnelle sauvegarde plusieurs types de données nécessaires pour l'exécution des activités, telles que les informations spécifiques de procédure, des ouvrages spécifiques contenus dans le vecteur de données d'ouvrage (JDV, Job Data Vector) et les informations spécifiques d'activités contenues dans les vecteurs de données de tâches (TDV, Task Data Vector). Ces éléments de données vectorielles sont des valeurs de données ou pointeur vers des informations stockées sur des répertoires externes d'informations. A chacun des composants dans le vecteur est donné une valeur type et une valeur initiale. La valeur initiale est nulle et est spécifiée par l'événement d'initialisation ou est chargée par le module de création d'ouvrage au démarrage de l'ouvrage. Quand une activité est démarrée, une copie du vecteur de donnée d'ouvrage est rendue disponible pour le client à travers le serveur réseau où la copie du vecteur JDV est chargée vers la station de travail. Certains éléments du vecteur sont lus et certains sont écrits par l'activité lorsqu'elle s'exécute.

Quand l'activité est achevée, le vecteur est sélectivement copié ou déchargé vers le serveur (3). De même, les vecteurs de données d'activité stockent les valeurs et les références pour les données spécifiques d'activités. Son format est identique au format du vecteur JDV.

Pour réaliser ces différentes actions le système utilise le module de gestion de données (370) qui a pour fonction :
- d'attacher les données appropriées aux ouvrages spécifiques, en créant le vecteur JDV et en démarrant le remplissage de ce vecteur avec les données spécifiques pour ensuite le transmettre à la station de travail (2) quand un utilisateur en a besoin,
- gérer l'intégrité des données et la sécurité en fournissant des mécanismes pour attacher les droits d'accès aux données et des stratégies de verrouillage pour protéger les données contre des accès concurrents,
- retrouver et accéder les données dans les bases de données de l'utilisateur externe en faisant appel à un module EDA d'accès aux bases de données externes. Les données nécessaires à la réalisation de ces fonctions sont stockées dans le fichier définition de données de procédure PDDDEF et dans le fichier EDA-ORA qui sont représentés aux annexes 6 respectivement 7.

Les modules (30 à 37) du serveur (3) communiquent à travers le système de communication, comportant les éléments (36,2,17,16) avec un module client consistant dans un ensemble de modules (10 à 15). Ces modules seront décrits dans la suite.

Le système serveur (3) communique à travers un réseau (1) et un serveur réseau (364) avec un système client (2) comportant une interface de communication (27) et une architecture à quatre couches, dont la première est le système de messages de flux de travail (26), la seconde couche (24) est constituée par différents jeux d'interface de programmes d'application client (241,242,243,244), d'une troisième couche de service (25) de gestion (251,252,253,254), et d'une quatrième couche (20,21) qui est la couche supérieure d'interface. Les différents modules d'une couche n'ont pas d'interaction entre eux.

Le système de messages de flux de travail (26) permet les échanges d'information entre les clients et le serveur.

Les informations échangées sont transportées par une structure spécifique appelée "message". Cette couche satisfait les fonctionnalités suivantes : connexion à la couche communication du serveur (364), déconnexion avec la couche communication du serveur et émission et réception de messages.

La fonction connexion permet d'établir un lien permanent avec le serveur (36). Une station de travail peut supporter une seule liaison. Pour cela, tous les messages qui sont échangés par des fonctions d'émission et de réception passent à travers ce lien.

Un message est composé d'une partie enveloppe et d'une partie donnée. La partie enveloppe contient l'émetteur, le destinataire et les informations d'état, tandis que la partie donnée contient le contenu du message.

Le système de messages (26) a aucune connaissance au sujet du contenu du message, ni de l'enveloppe et encore moins des données. Ce module envoie la partie enveloppe et le nom du fichier qui contient la partie donnée à travers le lien réalisé avec le serveur, tandis que le fichier de la partie donnée est déjà sur le système de fichier partagé (372) qui est partagé avec toutes les stations de travail et le serveur.

Les interfaces de programmation d'application des clients regroupent toutes les interactions entre la station de travail et le serveur. Ces interfaces sont classées selon les activités suivantes : administration, constitue une interface (254), coordination constitue une interface (254), création d'ouvrage constitue une interface (253), l'exécution d'activité constitue une autre interface (252), les tâches constituent une dernière interface (251).

Toutes ces interfaces de programmation sont générées par un générateur automatique de codes pour une description donnée des fichiers en entrée. Ceci assure la cohérence entre les interfaces de programmation client et du serveur.

La couche d'interface de programmation administration (244) définit les données qui sont classées selon les concepts et les données définis pour le système de traitement transactionnel. Elle permet la définition des procédures, des activités, des acteurs, des rôles et de l'affectation ou de la désaffectation d'un rôle à un acteur.

Les interfaces de coordination (244) permettent la commande de l'exécution d'ouvrage et sont constituées des éléments suivants : état d'un ouvrage, avancement d'un ouvrage, historique d'un ouvrage, qui fait quoi, nombre d'ouvrage actif, suspension d'un ouvrage, reprise d'un ouvrage, annulation d'un ouvrage.

Le jeu d'interfaces client (243) pour la création d'un ouvrage est constitué des interfaces qui participent à la création d'un nouvel ouvrage dans une procédure déterminée. Le jeu d'interface exécution d'activité n'est pas défini.

Le jeu d'interface tâche (241) donne à un acteur les facilités pour exécuter les tâches ordonnées et réparties. Ces facilités sont classées de la façon suivante : lecture d'une tâche offerte, acceptation d'une tâche offerte, recherche du vecteur de donnée d'ouvrage correspondant dans le serveur, achèvement d'une tâche et restitution du vecteur de donnée d'ouvrage réactualisé au serveur, réorientation d'une tâche à un autre acteur ou activité.

La couche de gestion des services regroupe des modules (251 à 254) qui gèrent les différents services proposés à l'acteur. Chaque module fournit un jeu bien définit de service à l'acteur, traite et maintient les données utiles localement et appelle les interfaces de programmation d'application client appropriées et respectives (241 à2144) pour fournir le service souhaité.

Un module gestion administration et coordination (242) fournit à l'acteur les services pour définir les concepts et données de flux de travail. Ceci inclut les liens avec les interfaces appropriées et le support des définitions de processus. La gestion de coordination envoie au serveur les requêtes de coordination venant de l'interface utilisateur correspondante et traite les réponses reçues.

Le module de gestion de création d'ouvrage (253) se résume à transmettre les créations d'ouvrage, les requêtes de création d'ouvrage au serveur et peut être capable de fournir une cession de création d'ouvrage pendant que l'acteur prépare les données d'initialisation correspondant à la procédure de définition de données PDDEF et lance la création d'ouvrage effective sur le serveur.

Le module de gestion de l'exécution d'activité (252) est dédicacé à réaliser l'exécution de la partie corps de l'activité. Cette exécution est requise par le module de gestion de tâche (251) à travers l'interface utilisateur (20). Une telle exécution peut être considérée comme une cession de travail pendant laquelle l'acteur exécute les actions correspondantes.

En dehors de ces actions qui sont une partie de l'exécution normale d'une activité, l'acteur a la possibilité de suspendre, annuler et bien entendu terminer un cession de travail.

Dans ce but le module de gestion d'exécution d'activité est pourvu des possibilités :
- de lecture du fichier de description d'activité ;
- de lecture et d'écriture des données d'ouvrage utilisées dans l'activité ;
- de lecture et d'écriture des données de tâches correspondantes utilisées dans l'activité et de commande des droits d'accès sur les données d'ouvrage ;
- de lancement du formulaire de présentation approprié de l'activité et de l'exécution des actions correspondantes à l'activité d'une façon guidée.

Un module de gestion de tâches (151) est dédicacé à gérer l'aspect multi-tâche d'un acteur puisque le système de traitement transactionnel donne la possibilité à un acteur de traiter plusieurs tâches en même temps. Pour cela, ce module maintient localement une mémoire des tâches et fournit la possibilité de sauvegarder, de retrouver cette mémoire et d'effacer des tâches de cette mémoire. Ce module comporte un jeu d'opération pour exécuter normalement les tâches qui sont les suivantes :
- réception d'une tâche offerte,
- acceptation d'une tâche offerte,
- recherche des données correspondantes du vecteur d'ouvrage sur le serveur,
- achèvement d'une tâche,
- restitution du vecteur d'ouvrage mis à jour au serveur,
- réorientation d'une tâche vers un autre acteur ou une autre activité,
- appel de l'activité d'exécution d'une tâche correspondante par l'interface utilisateur,
- traitement et maintient local des données correspondant aux tâches et leur historique.

Enfin un module de gestion de note, non représente, est également prévu pour fournir à l'acteur la facilité de création de note, d'attachement de note, de lecture et d'écriture, réception et émission de note, traitement local et maintenance de notes envoyées et reçues.

La couche supérieure est constituée de la couche d'interface qui comporte une interface coordinateur et administrateur (21) et une interface utilisateur (20).

L'interface administrateur et coordinateur (21) comporte les éditeurs de concept et de données et la commande des ouvrages. L'interface utilisateur comporte les logiciels, les parties permettant l'utilisation interactive du système de traitement transactionnel, l'exécution d'activité guidée par un formulaire et l'utilisation automatique du système de traitement transactionnel. Ces interfaces sont lancés soit par l'acteur lui-même, soit par le module de gestion (251).

L'interface utilisateur permet à l'acteur une participation et une contribution au travail de bureau. A travers celle-ci, l'acteur est capable d'accomplir les tâches qui lui sont attribuées, de démarrer un nouvel ouvrage et d'échanger des messages avec les autres acteurs. L'acteur est identifié par son nom et son mot de passe dans le processus de connexion.

Au cours du fonctionnement, les événements de création d'ouvrage incitent le module ordonnanceur (scheduler) à démarrer un nouvel ouvrage. Ainsi l'ordonnanceur peut démarrer une première activité. Ensuite un acteur (un utilisateur spécifique) est alloué par le répartiteur à la première activité et l'ouvrage est envoyé à la station de travail du client approprié. Quand la station de travail achève l'activité, l'ouvrage est retourné au serveur où l'ordonnanceur met à jour l'état de l'activité et trouve une nouvelle activité. L'ordonnanceur appelle le répartiteur pour attribuer les acteurs en fonction des rôles et ensuite l'information d'ouvrage et les demandes d'exécution sont envoyées à la machine client appropriée pour exécuter l'activité suivante.

Tous ces états, activité, rôle, utilisation d'acteur, attribution d'information sont enregistrés par la facilité de vérification (auditing) du module coordinateur une fois les attributions faites. Ce cycle se poursuit jusqu'à ce que la dernière activité soit achevée et à ce moment là, l'ordonnanceur procède à l'achèvement de l'ouvrage.

Le module de gestion de l'exécution d'activité (252) contrôle et supporte les exécutions d'activités, en exécutant le corps de programme correspondant à l'activité demandée. Ce corps peut accéder à des données externes et avoir accès à des données spécifiques de l'ouvrage ou des données spécifiques d'activités . Puisque cette activité est fréquemment interactive, le module d'interface utilisateur est appelé par ce corps. Les documents et les formulaires sont affichés et manipulés par l'utilisateur comme une partie de cette activité.

Quand l'activité est achevée, un message est envoyé au logiciel du serveur indiquant le nouvel état. Comme un client peut travailler sur plus d'un ouvrage simultanément, le module gestionnaire de tâches (251) maintient les statuts des ouvrages et présente les différents ouvrages et leurs statuts à l'utilisateur. A chaque station de travail, l'information appropriée est accessible et toutes les informations sont maintenues quand un utilisateur éteint sa station de travail. Des rôles multiples peuvent être résidents sur une seule machine client.

Les interactions entre les modules sont facilitées par le sous-système de communication (27,1,36) qui autorise les échanges de messages entre les modules du système et aussi entre les utilisateurs. Ce système supporte à la fois des communications synchrones (ex : fetchtask) et des communications asynchrones (ex : sendto). Les interactions de ces communications sont mises en oeuvre par les différentes couches du protocole de communication.

Dans une variante de réalisation le système de traitement transactionnel peut être utilisé avec une interface utilisateur telle que celle décrite ci-après qui permet une grande facilité d'utilisation pour l'utilisateur.

Cette interface est basée sur des documents, des icones et des formulaires et est constituée sous forme de trois dossiers qui peuvent être accède et manipulé par le système de traitement transactionnel.

Ce sont les dossiers, nouvelles tâches (new tasks), tâches en cours (on going tasks) et tâches achevées (completed tasks).Les tâches qui sont les travaux à effectuer peuvent être conceptualisées comme des "instance d'activité".

Les éléments dans le dossier "nouvelles tâches" sont des ouvrages qui sont dans l'état validé prêt à être exécutés par ce rôle. En ouvrant le dossier, l'utilisateur peut demander et initier de nouvelles tâches. Cette action initiation, fait passer l'état au mode actif, déplace l'icone de la tâche dans le dossier "tâches en cours" et ouvre le premier formulaire associé avec la tâche sur l'écran utilisateur.

En ouvrant le dossier "tâches en cours", l'utilisateur peut visualiser l'avancement des tâches. L'état, la priorité et l'urgence de chaque tâche et également visualisable. De nombreuses tâches peuvent être actives avec aucun, un ou plusieurs de leurs formulaires de tâches ouverts simultanément sur la même station.

Le dossier "tâches achevées" est le moyen pour l'utilisateur d'interroger le système sur l'état courant, l'historique passé ou les défauts de comportement des ouvrages.

Le dossier "notes reçues" contient les messages expédiés par les autres utilisateurs du système de traitement transactionnel ou par les modules du système et qui ont été reçus. Ceci permet des communications informels et flexibles entre les utilisateurs du système.

En général, les informations spécifiques de tâches, les outils et les accès externes sont représentés comme des éléments, icônes et menus sur le formulaire de tâches.

Cette interface (20) comporte un logiciel de présentation et de constitution des dossiers. Ce logiciel est en relation par une liaison du terminal avec une souris qui permet de provoquer des événements extérieurs. La souris a été choisie du type à deux boutons, le bouton de gauche étant affecté par convention aux sélections de zones ou d'objets graphiques à l'écran et aux appels d'éditeur, le bouton de droite étant affecté à des opérations spécifiques telles que la manipulation de certains menus. Les événements extérieurs provenant de la souris sont traités par une interface souris préprogrammée incorporée au logiciel et susceptible en outre de reconnaitre l'appui (down), le relâchement (up) d'un bouton, la traîne (drague) de la souris et des événements logiques tels que l'entrée du pointeur souris dans la fenêtre. A l'écran la position du pointeur de la souris est repérée par une petite flèche dirigée vers le haut.

Bien entendu, sans sortir du cadre de l'invention, la souris pourrait être remplacée par tout autre dispositif de pointage tel qu'un crayon optique ou une table graphique. Enfin en complément de l'interface souris, on prévoit également un interface pour un clavier programmé autant pour les touches de caractères que celles de contrôles et celles de pointeurs, de façon à pouvoir entrer dans le mode édition les informations qui correspondent aux différentes zones des différentes fenêtres.

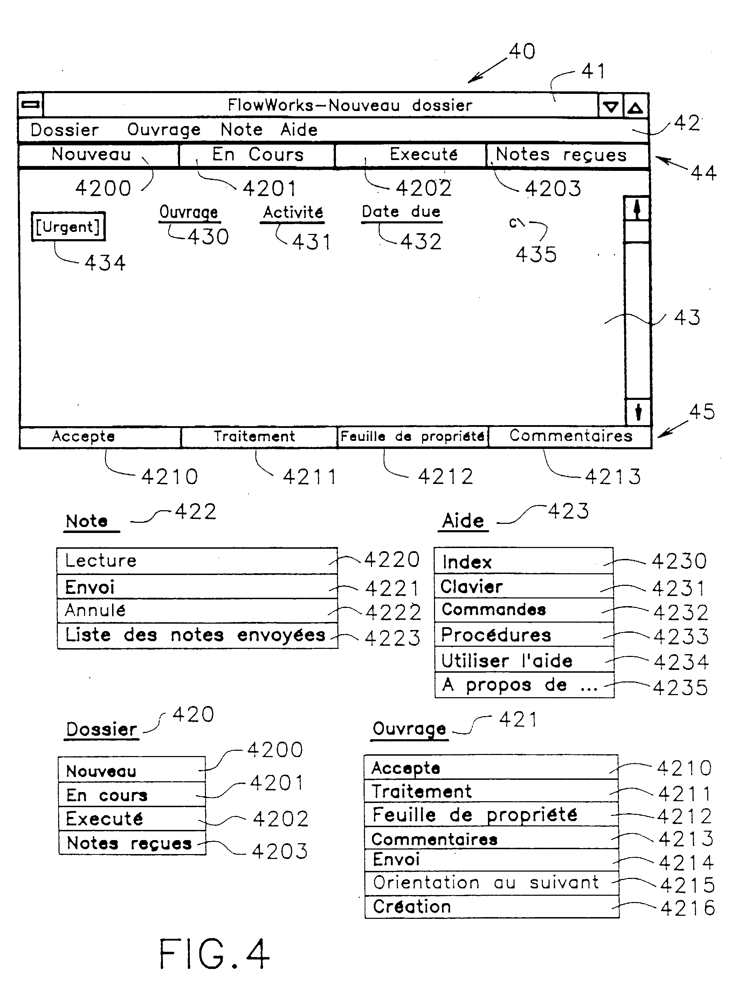

Le logiciel de présentation permet l'affichage des fenêtres et l'exécution des actions sélectionnées sur le menu de la fenêtre à la suite du déclenchement d'un événement extérieur, tel que par exemple, l'actionnement d'un bouton souris. La première fenêtre affichée après la connexion avec le serveur est la fenêtre (40, fig 4).

Cette fenêtre (40, fig 4)) comporte une barre de titre (41) en dessous de laquelle se trouve une barre menu (42) permettant de sélectionner un des objets se trouvant au menu à savoir, dossier (420), ouvrage (421), note (422) et aide (423). Chacun des objets sélectionnés faisant apparaître la possibilité d'un choix d'attribut, par exemple pour l'objet dossier (420), le choix entre l'attribut nouveau (4200), en cours (4201), réalisé (4202), ou note reçue (4203).

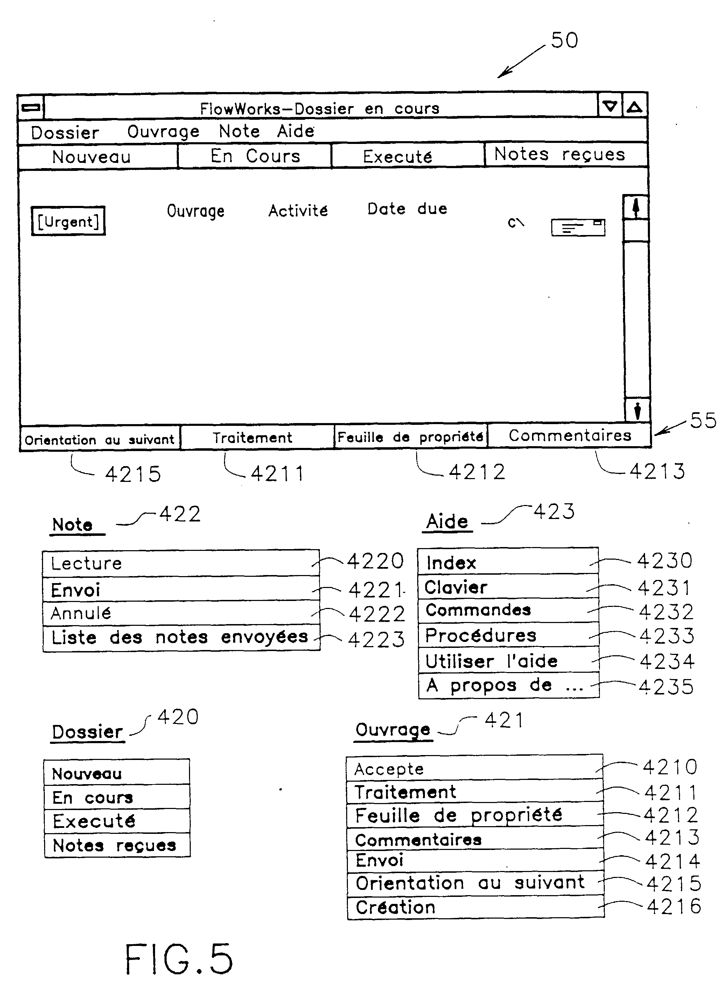

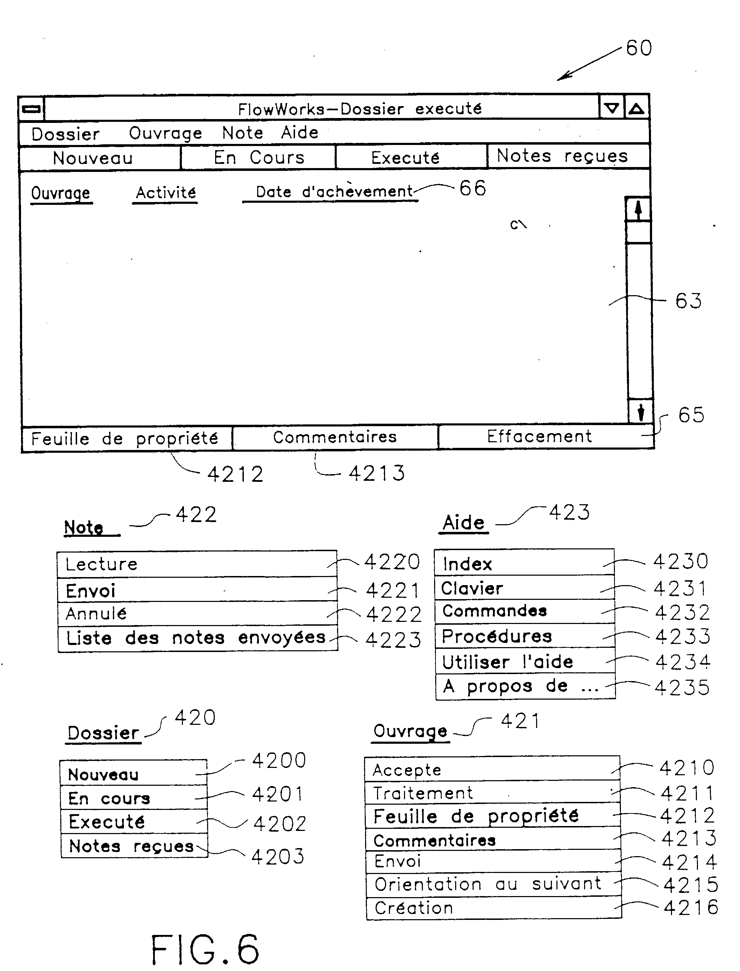

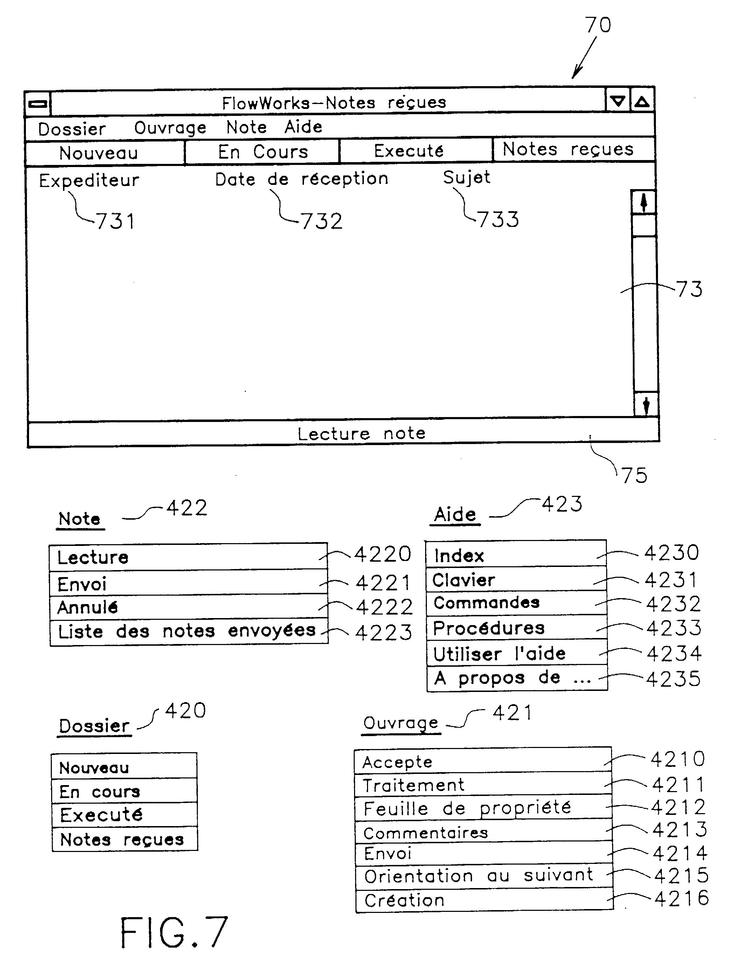

Ce choix permet en le validant de changer de fenêtre et de faire apparaître une des autres fenêtres "dossier en cours" (50 fig 5) " "dossier exécuté" (60 fig 6) ou "note reçue" (70 fig 7).

Pour l'objet ouvrage (421), le choix consiste entre les fonctions "accepte" (4210) pour accepter une tâche, action qui est implicite si la tâche est démarrée, "traitement" (4211) pour démarrer ou continuer l'exécution d'une tâche, "feuille de propriété" (4212) pour voir la fiche qui montre plus d'informations au sujet de la tâche de la liste, la fonction "commentaire" (4213) pour voir les commentaires concernant la tâche courante et les commentaires édités à l'étape précédente et pour éditer éventuellement de nouveaux commentaires. La fonction "envoi" (4214) pour envoyer toutes les données d'activité à un acteur, un rôle ou une activité. Cette fonction pouvant être aussi utilisée pour rejeter une tâche. La fonction "orientation au suivant" (4215) pour préciser que la tâche est achevée et peut être envoyée à la prochaine étape de la procédure. La fonction "création" (4216) pour créer un nouvel ouvrage.

Dans le menu "ouvrage" on constatera que la fonction "orientation au suivant" apparait en caractère moins gras que les autres fonctions, car cette fonction ne peut être sélectionnée lors de l'affichage de la fenêtre "nouveau dossier" indiquée par la barre de titre (41).

Le menu "note" (422) comporte la fonction "lecture" (4220) pour visualiser une note reçue ou envoyée. La fonction "expédition" (4221) pour éditer et envoyer une note. La fonction "annule" (4222) pour effacer de la liste une note reçue ou envoyée, la fonction "liste des notes envoyées" (4223) pour être capable de visualiser la liste des notes qui ont été envoyées.

Le menu "aide" (423), comporte les fonctions "index", "clavier", "commandes", "procédures", "utiliser l'aide", "à propos de", qui sont des fonctions classique et ne seront pas décrites en détail.

Dans le menu "note" (422) on constate également que la fonction "lecture" (4220) et "annuler" (4221) ne sont pas en caractère gras comme les autres (envoi, liste des notes) , ce qui indique que ces fonctions (4220,4221) ne peuvent être sélectionnées lors de l'affichage de la fenêtre (40) "nouveau dossier". Cette fenêtre "nouveau dossier" se complète d'un cadre (43) dans lequel une colonne "ouvrage" (430) permet d'indiquer l'identifieur de l'ouvrage, une colonne (431) "activité" qui permet d'indiquer le nom de l'activité, une colonne (432) qui permet d'indiquer à quelle date l'activité doit être terminée et une colonne commentaire dans lequel un signe apparaît pour indiquer que des commentaires sont attachés à l'ouvrage ou non. Enfin une étiquette (434) apparait en face de l'ouvrage ou de l'activité créée pour indiquer son urgence ou non.

Lorsque l'on est dans la fenêtre et dans le menu "nouveau dossier", la ligne (44) de bouton de sélection de l'attribut des dossiers fait apparaître le bouton de sélection nouveau (4220) avec un fond différent des boutons de sélection "en cours" (4201) "exécuté" (4202) ou "notes reçues" (4203).

La fenêtre comporte également des boutons de commandes (45) qui permettent de lancer directement les fonctions "accepte" (4210), "traitement" (4211), "commentaire" (4213), "feuille de propriété" (4212) du menu "ouvrage" (421).

La fenêtre "dossier en cours" (fig 5) comporte les mêmes menus et les mêmes éléments sauf pour la barre de bouton de commande (55) qui fait apparaître les fonctions "orientation vers le suivant", "traitement", "feuille de propriété" et "commentaires". A la différence également de la fenêtre de la figure 4, cette fenêtre ne permet pas la sélection de la fonction "accepte" (4210).

La fenêtre "dossier exécuté" représentée à la figure 6 comporte outre la barre titre et la barre menu dans le cadre (63), en plus des colonnes "ouvrage" et "activité", une colonne (66) permettant d'afficher la date d'achèvement de l'ouvrage ou de l'activité et en bas du cadre, une ligne de bouton de commande (65) constituée par les commandes "feuille de propriété", "commentaires" et "effacement", ces fonctions sont d'ailleurs les seules qui puissent être sélectionnées dans le menu "ouvrage".

Enfin la figure 7 représente la fenêtre des "notes reçues" qui comporte la barre titre, la barre de menu et un cadre (73) qui permet dans une colonne (731) d'afficher "l'expéditeur", dans une colonne (732) de mettre la date de réception de la note et dans une colonne (733) d'afficher le sujet de la note.

Cette fenêtre comporte également une barre (75) constituée d'un seul bouton de commande "lecture Note" permettant la lecture de la note.

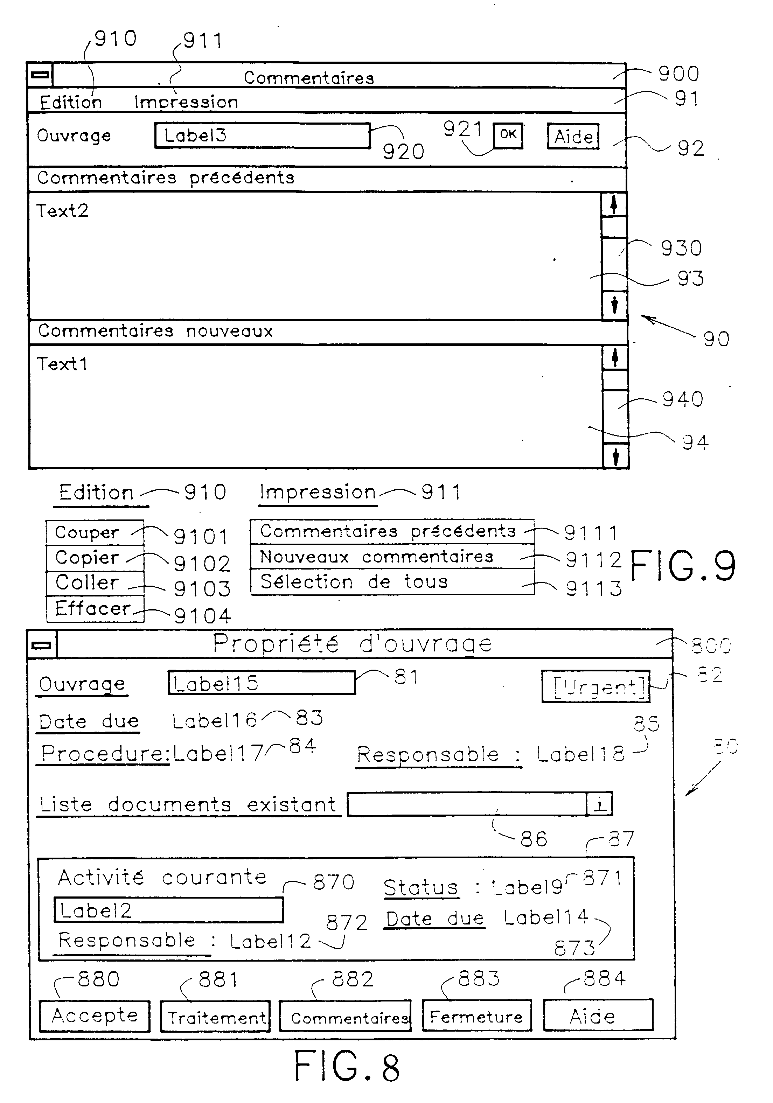

La sélection de la fonction "feuille de propriété " (4212) dans une fenêtre "dossier nouveau" (fig 4) ; dossier en cours (fig 5) ; "dossier exécuté" (fig 6) fait apparaître la fenêtre "propriété de l'ouvrage" représentée à la figure 8. Cette fenêtre permet d'appeler une fonction d'édition et comporte un premier champ (81) permettant d'inscrire le nom de l'ouvrage et une étiquette (82) faisant apparaître le terme "urgent" si cet ouvrage a été désigné comme urgent.

Un deuxième champ (83) permet d'indiquer la date à laquelle l'ouvrage doit être terminé, un troisième champ (84) permet d'indiquer le nom de la procédure auquel l'ouvrage est rattaché, un cinquième champ (85) permet d'indiquer le nom du responsable pour l'ouvrage et une fenêtre déroulante (86) permet d'afficher la liste des documents attachée à l'ouvrage. Une boite (87) permet d'afficher 4 champs concernant l'activité courante, un premier (870) indiquant le nom de l'activité, un second (871) indiquant l'état de la tâche de l'activité courante, un troisième (872) indiquant le responsable de la tâche et un quatrième (873) donnant la date à laquelle la tâche doit être exécutée.

Deux flèches non représentées dans la barre des boutons de commande (880 à 883) l'une avec l'étiquette précédente, l'autre avec l'étiquette suivante, permettent de voir respectivement la feuille de propriété d'ouvrage précédent et la feuille de propriété d'ouvrage suivant.

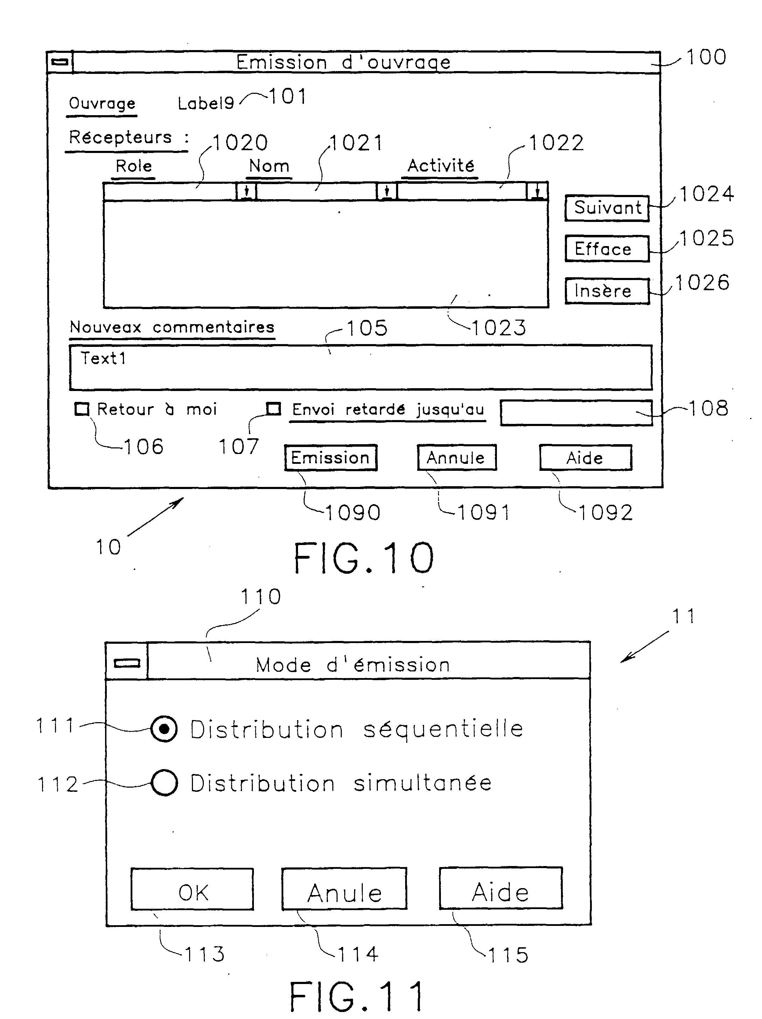

Le bouton de commande "accepte" (880) n'est utilisable que quand l'état de la tâche est nouveau. Un deuxième bouton de commande "traitement" (881) n'est utilisable que quand l'état de la tâche est accepté, suspendu ou nouveau. Un troisième bouton de commande "commentaires" (881) ouvre la fenêtre commentaire qui est décrite en relation avec la figure 9. Un quatrième bouton de commande "fermeture" (882) ferme la fenêtre de "propriété d'ouvrage" (80) boite et un cinquième bouton de commande "Aide" (883) permet d'obtenir une assistance.

La fenêtre de "commentaire" (90) comporte une barre titre (900), une barre menu (91) permettant d'appeler la fonction d'édition ou d'impression, un champ "ouvrage" (92) dans lequel le nom de l'ouvrage peut être reporté dans la boite d'édition (920) et deux boites de texte (93,94) étiquetées "commentaires précédents" et "nouveaux commentaires", Un bouton de commande "OK" (921) permet de fermer la boite en effectuant l'enregistrement du nouveau commentaire s'il y en a eu.

Le menu (91) comporte un menu "d'impression" permettant de lancer les fonctions suivantes : "commentaires précédents", "nouveaux commentaires", "sélection de tous", et un menu d'édition permettant de lancer les fonctions : "couper", "copier", "coller", "effacer".

La figure 10 représente la fenêtre qui est affichée sur l'écran de la station de l'utilisateur lorsque celui-ci sélectionne la fonction "émission d'ouvrage". Cette fenêtre comporte une barre de titre "émission d'ouvrage" (100) et un champ (101) permettant d'indiquer le nom de l'ouvrage, une partie (102) concernant les récepteurs, une partie (106) concernant la réémission de l'ouvrage, une boite de texte étiquetée "nouveaux commentaires" (105) qui comprendra tous les commentaires de l'émetteur et dans laquelle l'émetteur sera capable d'ajouter des nouveaux commentaires destinés au récepteur, un bouton de contrôle (107) assurant la fonction "d'émission retardée jusqu'au" suivi d'une boite de texte (108) dans laquelle l'utilisateur peut entrer la date à laquelle il souhaite que la tâche soit envoyée, les boutons de commande "émission" (1090) dont la fonction dépend ou non du fait qu'il y a plusieurs récepteurs, s'il y a un seul récepteur avec un clic sur le bouton de commande, l'émission est achevée, s'il y a plusieurs récepteurs, un clic sur le bouton "envoi" ouvre la boite de dialogue "mode d'émission" décrite ci-après en liaison avec la figure 11, un bouton de commande "annule" (1091) pour fermer la boite "émission d'ouvrage" sans effet.

La partie concernant le récepteur est composée de boites combinées étiquetées "role" (1020), "nom" (1021), "activité" (1022) dans laquelle l'utilisateur peut choisir un élément ou écrire ce qu'il souhaite. La valeur défaut n'est pas définie, et seulement un des trois paramètres du récepteur doit être rempli. Si l'utilisateur ne remplit pas au moins un des paramètres, la commande "envoi" ne sera pas valable.

Une boite de liste dont chaque ligne est complétée avec les valeurs des boites de combinaison, un bouton de commande "suivant" (1024) pour aller à la ligne suivante, un bouton de commande "efface" (1025) pour effacer une ligne de la liste, un bouton de commande "insère" (1026) pour insérer une ligne libre entre la ligne sélectionnée et la ligne du dessous.

La fenêtre 11 du mode d'émission permet par sa boite de dialogue comportant deux boutons d'options, un premier (111) de distribution séquentielle, d'envoyer l'ouvrage à chaque personne de la liste dans un mode séquentiel et dans l'ordre de circulation correspondant avec un ordre de circulation correspondant à l'ordre de la liste, un deuxième bouton (112) de distribution simultané dans lequel l'ouvrage sera envoyé à chaque personne de la liste dans un mode parallèle.

Cette boite de dialogue comporte également les boutons de commande "OK" (113) pour confirmer le choix et achever l'émission, un bouton de commande "annule" (114) pour fermer la boite et un bouton de commande (115) pour demander une assistance.

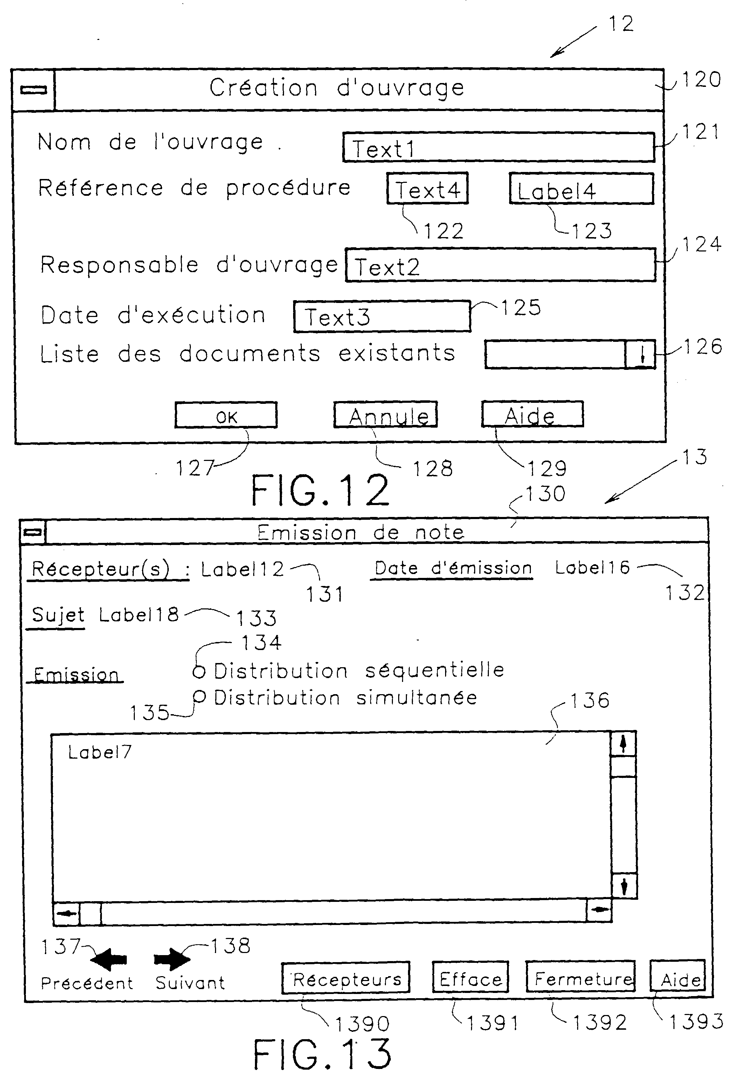

La fonction "création d'ouvrage" est représentée à la figure 12 par une fenêtre (12) comportant une barre de titre "création d'ouvrage" (120) et un champ (121) permettant de rentrer dans un pavé d'édition de texte le nom de l'ouvrage, un deuxième champ "référence de procédure" permettant de rentrer dans un pavé (122) le nom de la procédure et dans un pavé (123) une étiquette, un troisième champ "responsable de l'ouvrage" qui permet de rentrer dans un quatrième pavé (124) le nom du responsable, un cinquième champ "date à laquelle l'ouvrage doit être exécuté" comportant un cinquième pavé (125) permettant de rentrer la date, un sixième champ (126) permettant d'afficher la liste des documents existants et les boutons de commande "OK" de validation (127), d'annulation (128), et d'assistance (129).

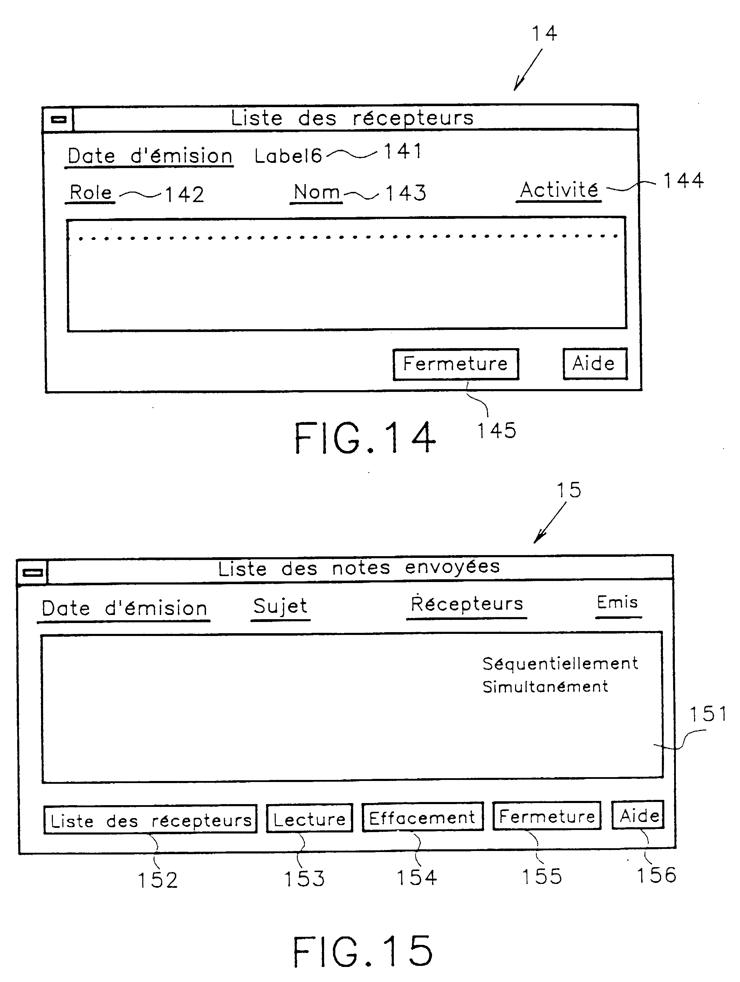

La fonction "émission de notes" est représentée par la figure 13 et fait apparaître une fenêtre (13) comportant une barre de titre (130), un premier champ (131) permettant de faire apparaître le récepteur, un deuxième champ (132) permettant de faire apparaître la date d'émission, un troisième champ (133) permettant de faire apparaître le sujet de la note, un ensemble de deux boutons d'option permettant de choisir entre la distribution séquentielle par un bouton (134) et la distribution simultanée par un bouton (135). Une boite (136) permet de sélectionner les noms des notes à envoyer parmi une liste figurant dans cette boite. Une flèche (137) "précédente" et une autre flèche (138) "suivante" permet de sélectionner dans la liste la note précédente ou la note suivante. Enfin les boutons de commande "récepteur" (1390) permet d'appeler la fonction permettant l'ouverture de la liste des récepteurs qui est représentée à la figure 14, un bouton (1391) permet d'effacer une note, un bouton (1392) permet de fermer la fenêtre "émission de notes", et un bouton (1393) permet de faire appel à une aide.

La boite (14) "liste des récepteurs" comporte un champ (141) indiquant la date d'émission et une boite de texte comportant la liste des récepteurs qui est composée de trois colonnes, une première (142) indiquant le rôle, une deuxième (143) indiquant le nom et une troisième (144) l'activité. Un bouton de commande "fermeture" (145) permet de fermer la fenêtre 14.

La fonction "notes reçues" est attachée à la sélection de la fonction "note lecture" (4220) et permet l'affichage d'une fenêtre identique à celle de l'émission à part que le titre est "réception de notes", l'émetteur remplace le récepteur, les deux boutons d'option pour l'émission sont supprimés et la possibilité de documenter une liste de récepteurs par un bouton de commande a été également supprimé puisque cette fonction n'est pas nécessaire dans la réception de notes. Les autres éléments à savoir la boite de texte avec barre de défilement horizontale et verticale, les flèches "précédent" "suivant", la commande "effacement", "fermeture" et "assistance" sont conservés.

Enfin la fonction "liste des notes envoyées" sélectionnée fait apparaître une fenêtre (15) représentée à la figure 15 dans laquelle une boite de listage (151) avec les colonnes suivantes, "date d'émission", "sujet", "récepteur" "émis" permet de faire apparaître dans chaque ligne la date d'émission, le sujet, le récepteur vers lequel la note à été émise, et le fait de savoir si la note a été émise séquentiellement ou simultanément. Cette fenêtre comporte également les boutons de commande d'affichage de la liste des récepteurs (152), de lecture de la note (153), d'effacement (154), de fermeture (155) et d'assistance (156).

Les fonctions et les présentations décrites ci-dessus réalisées par le logiciel de présentation et de constitution de dossier qui fait partie de l'interface utilisateur facilitent grandement l'utilisation du système de traitement transactionnel et améliorant son ergonomie.

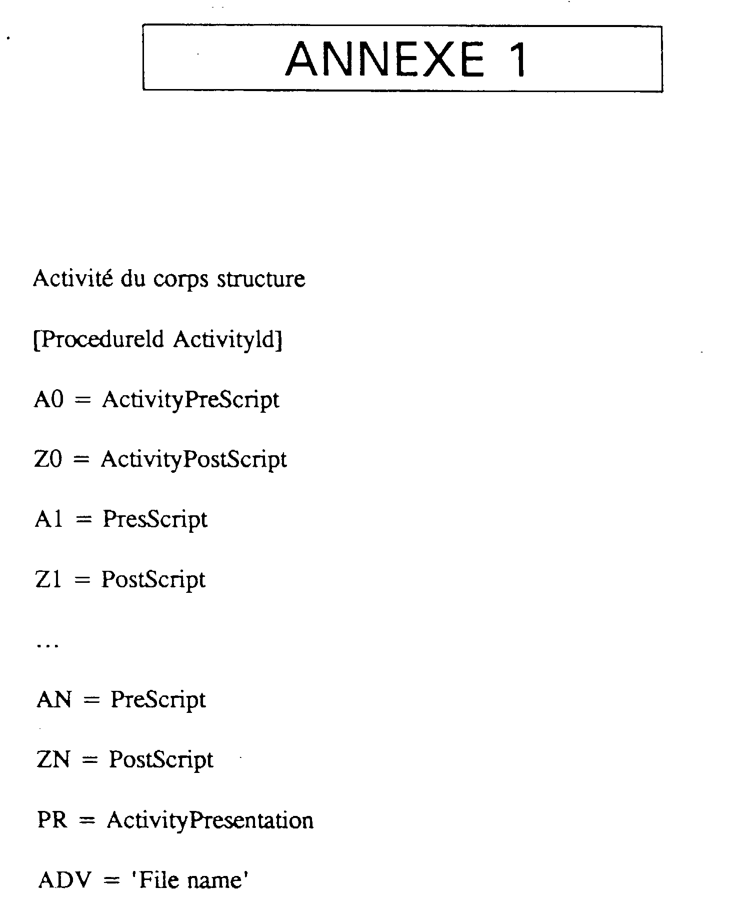

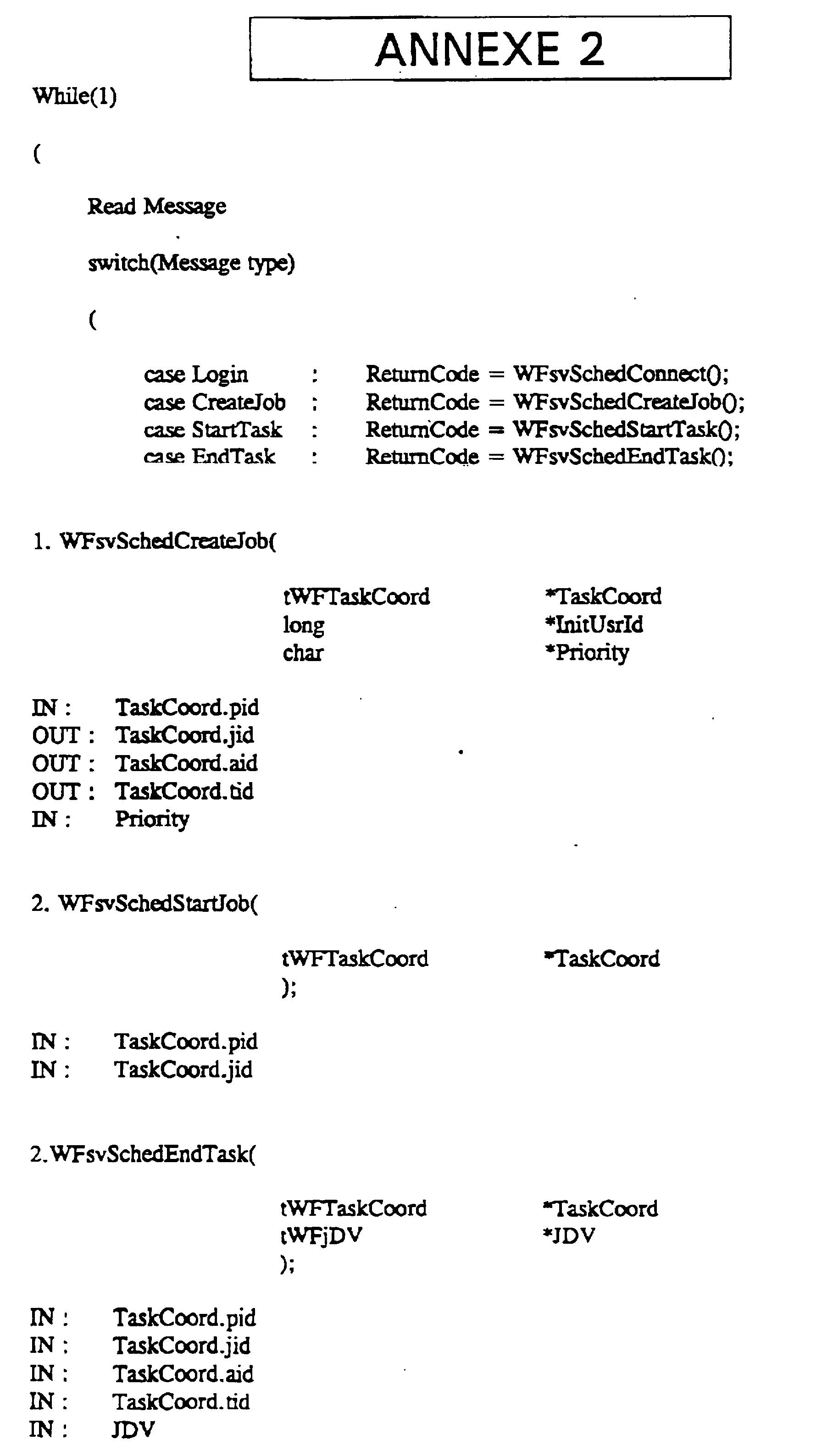

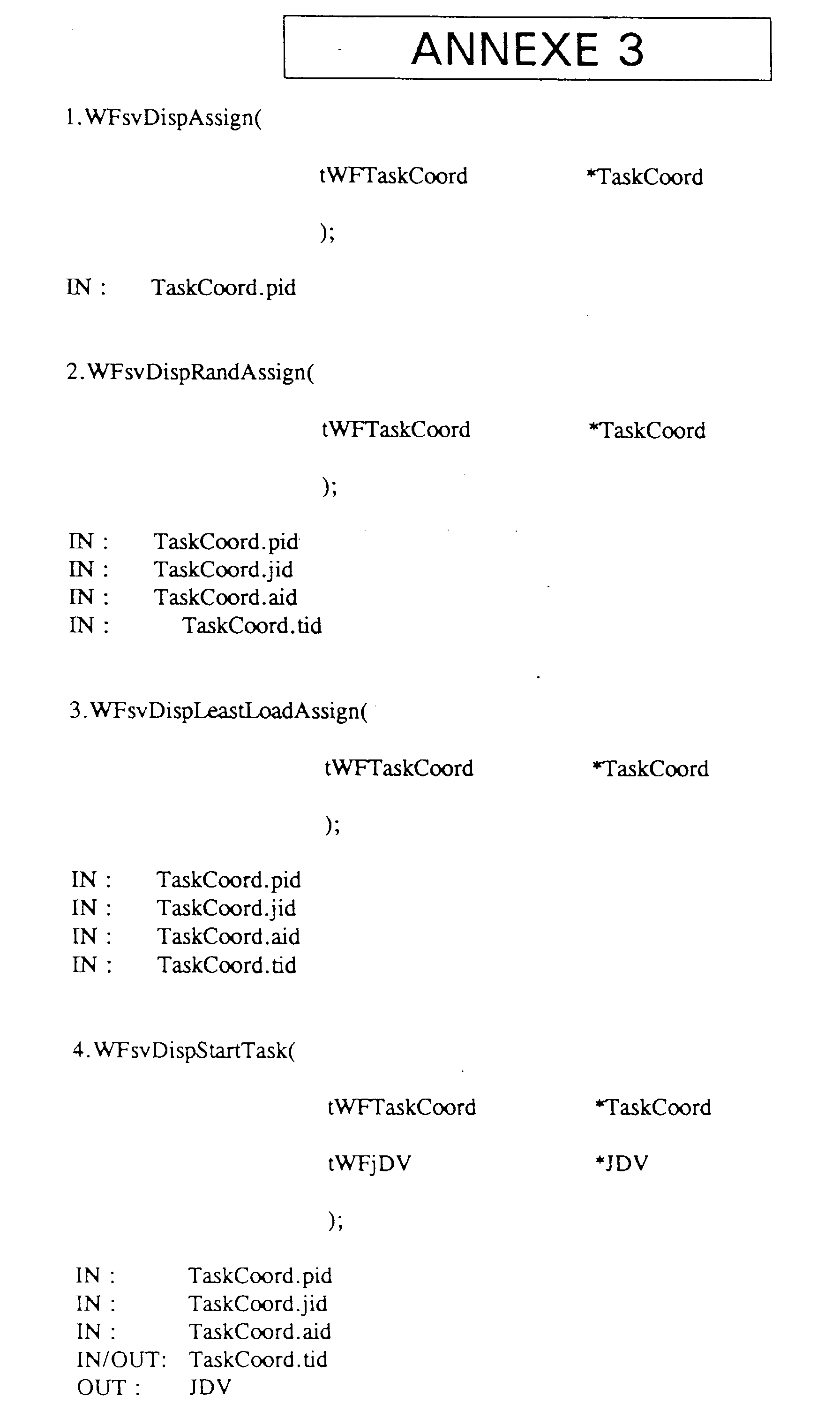

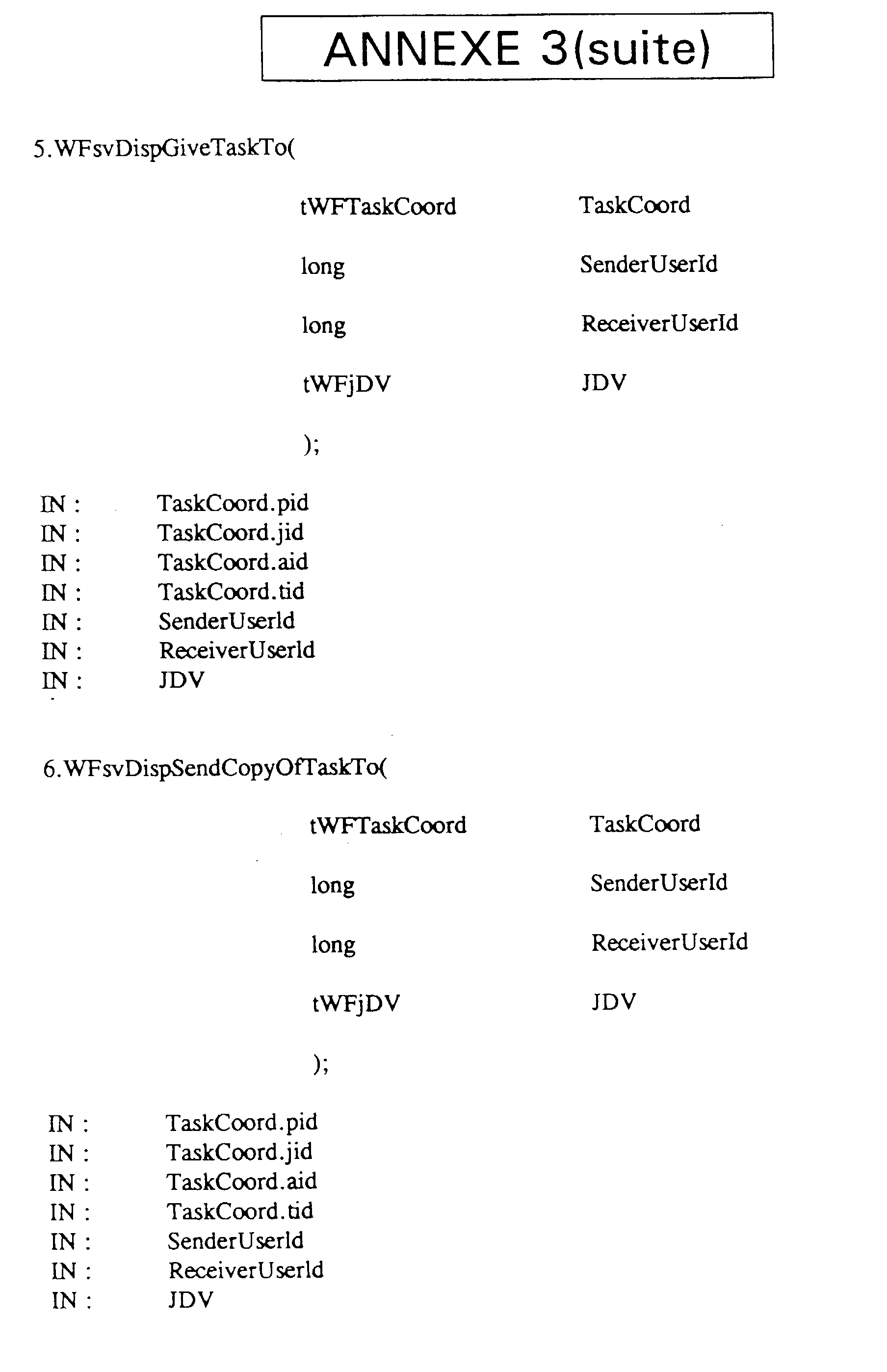

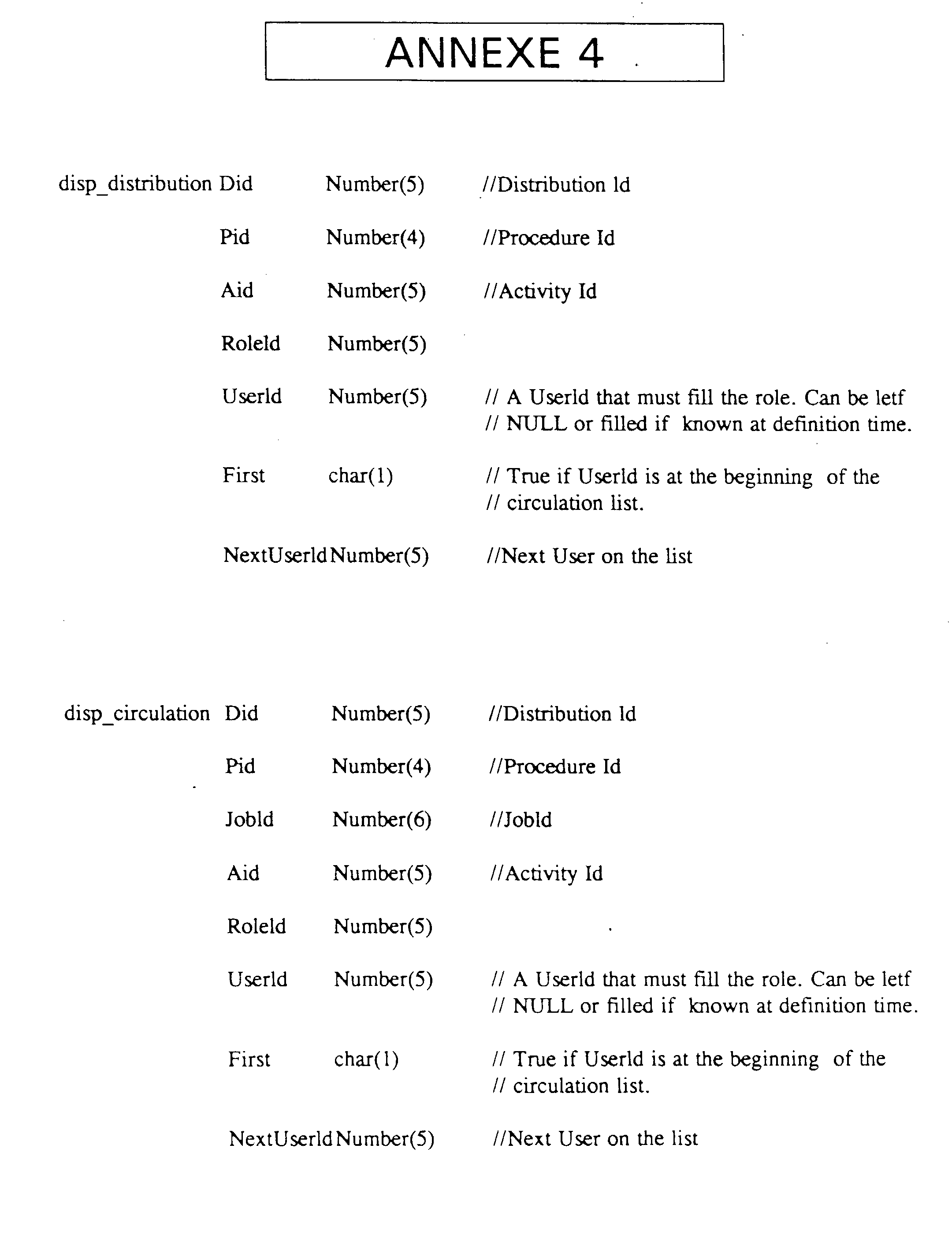

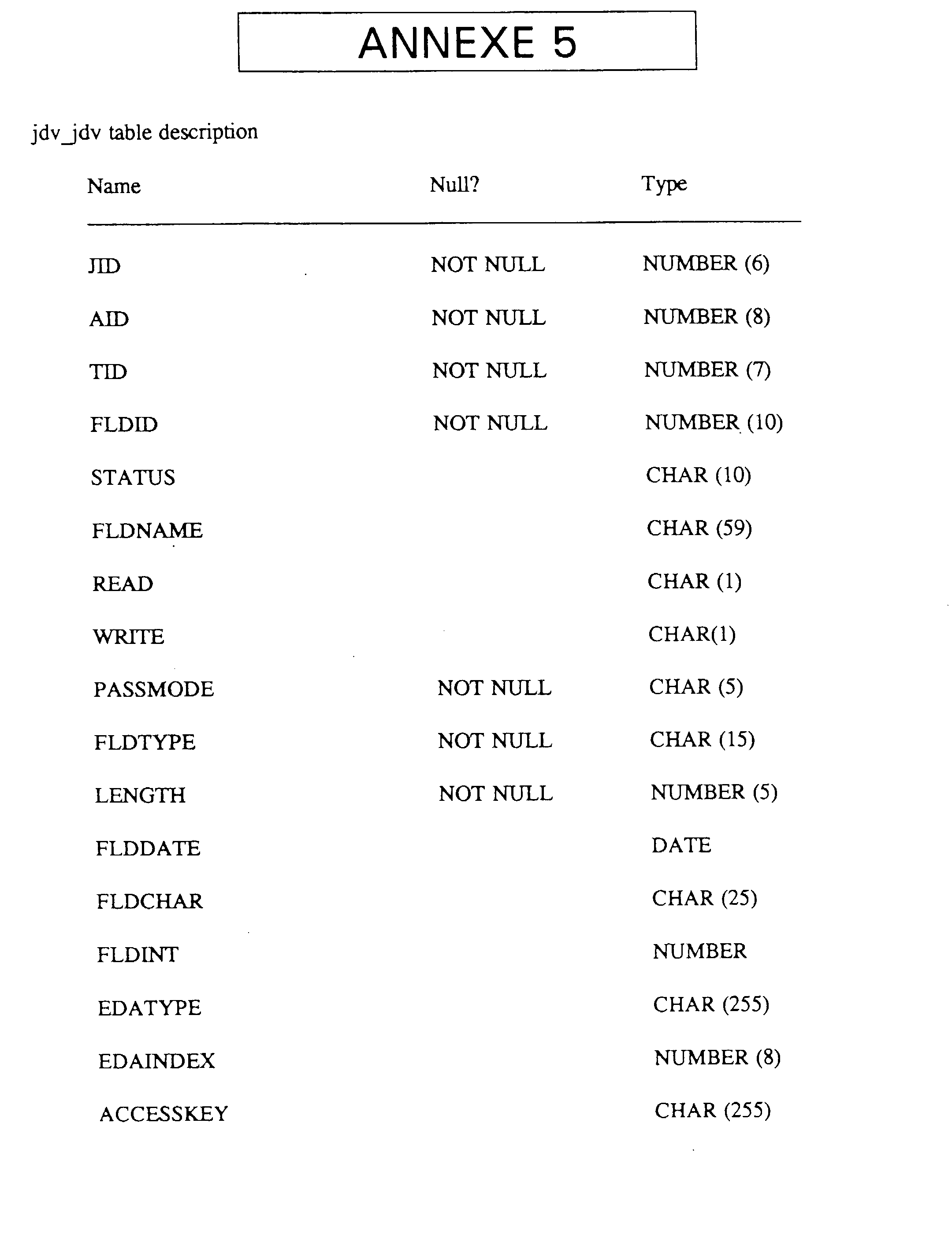

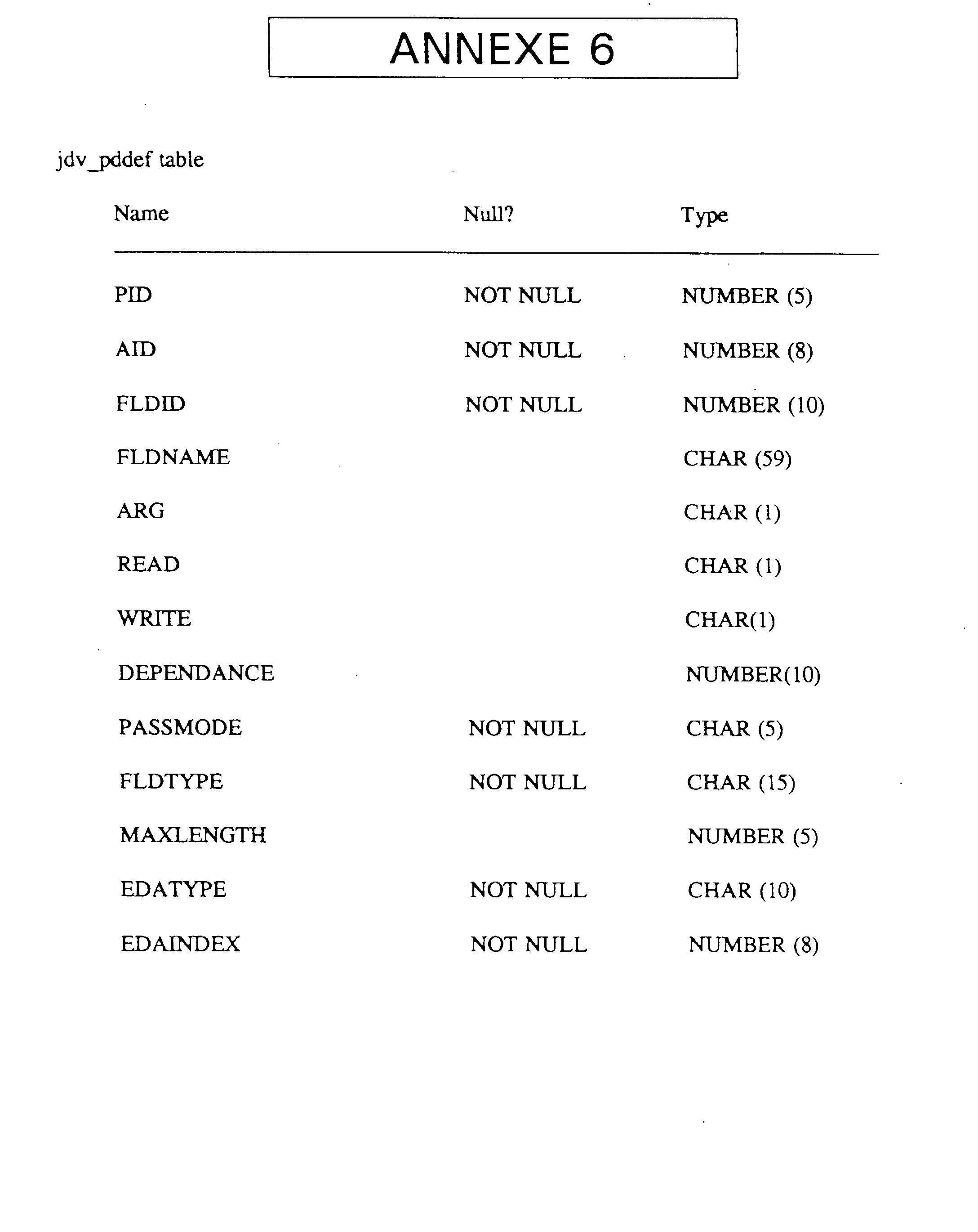

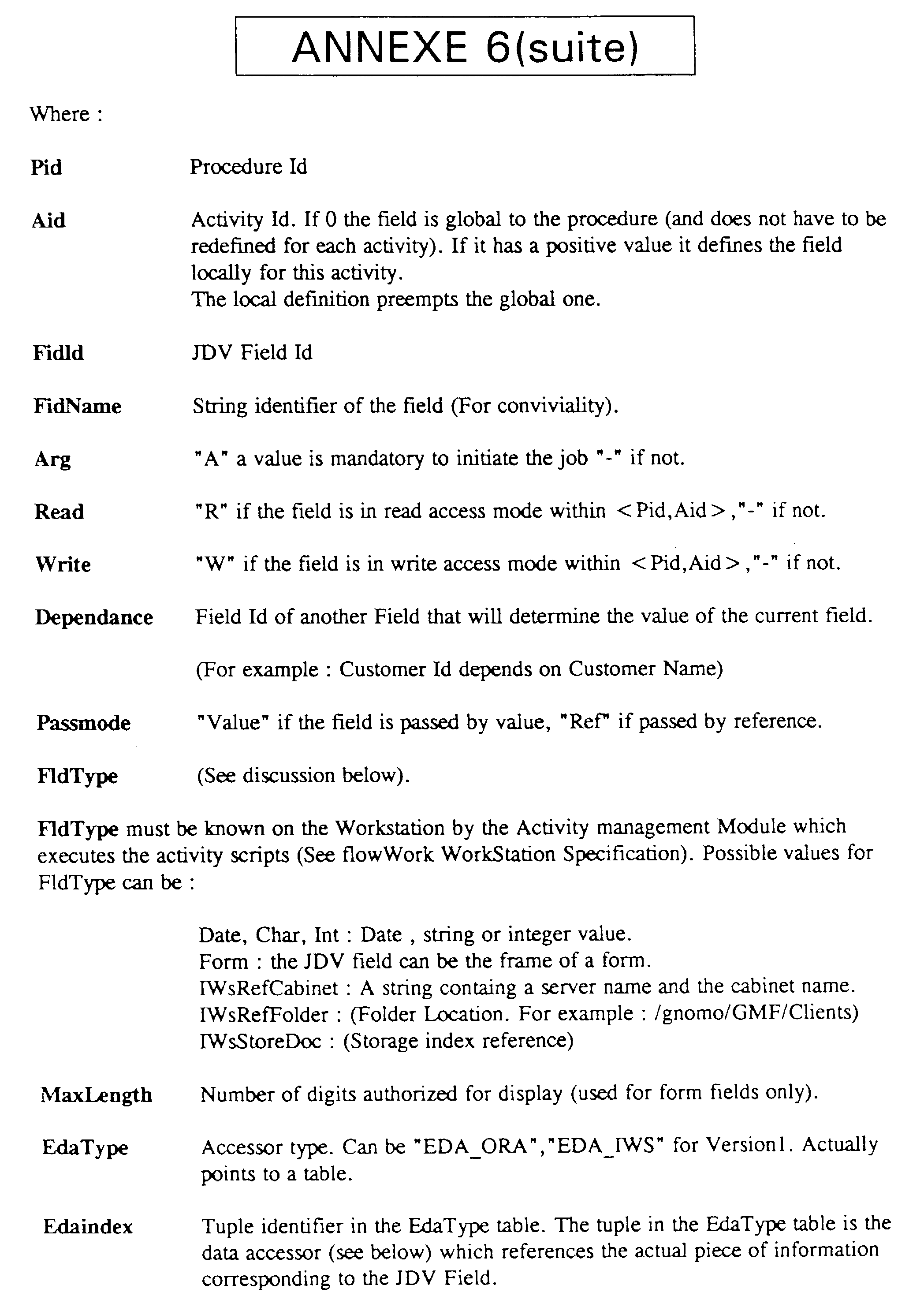

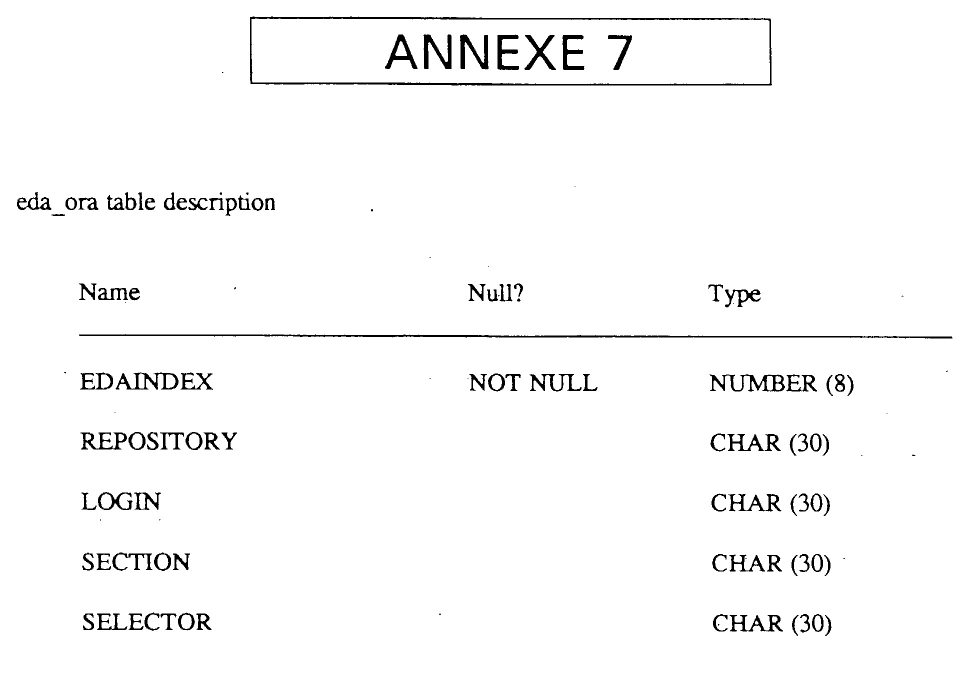

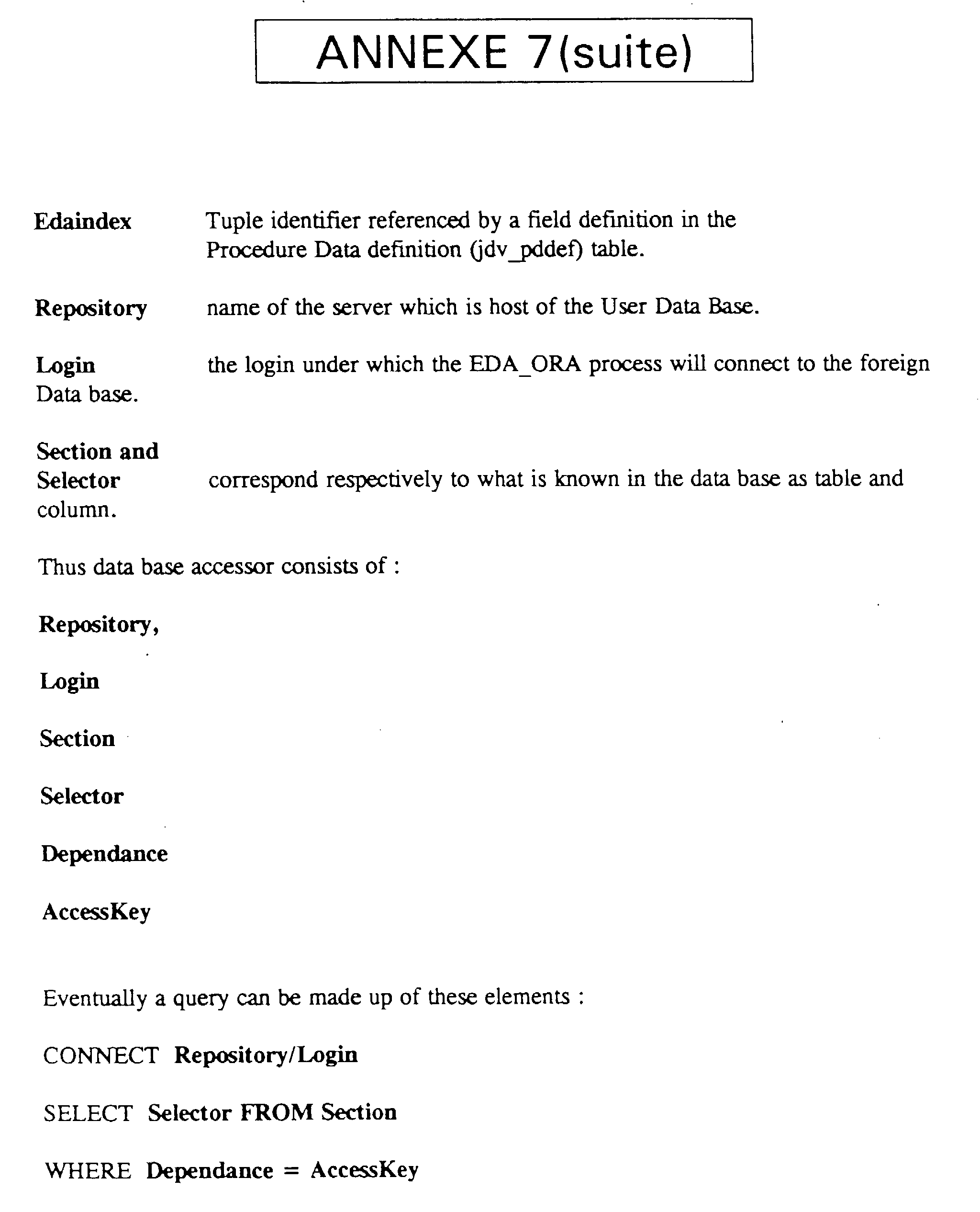

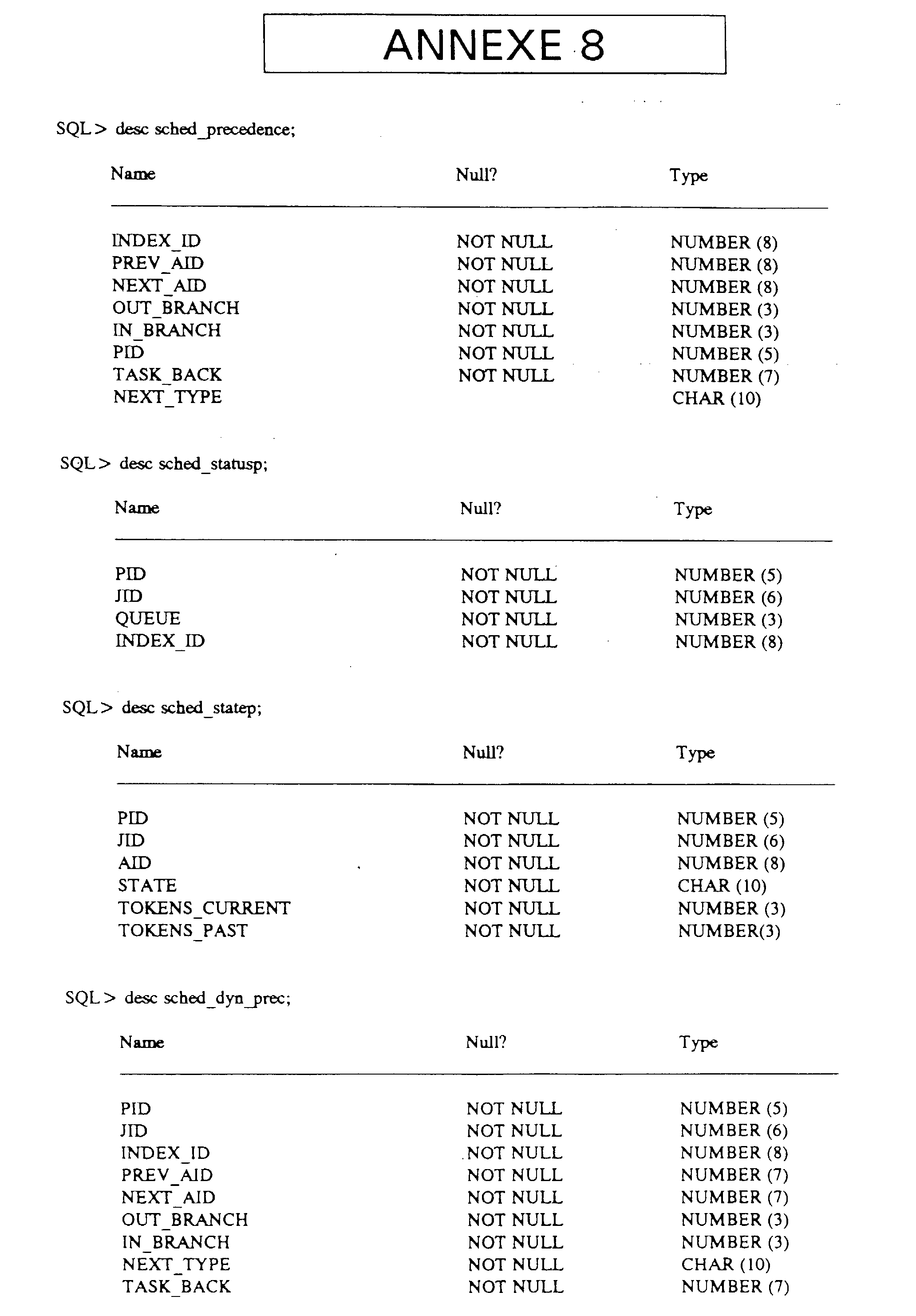

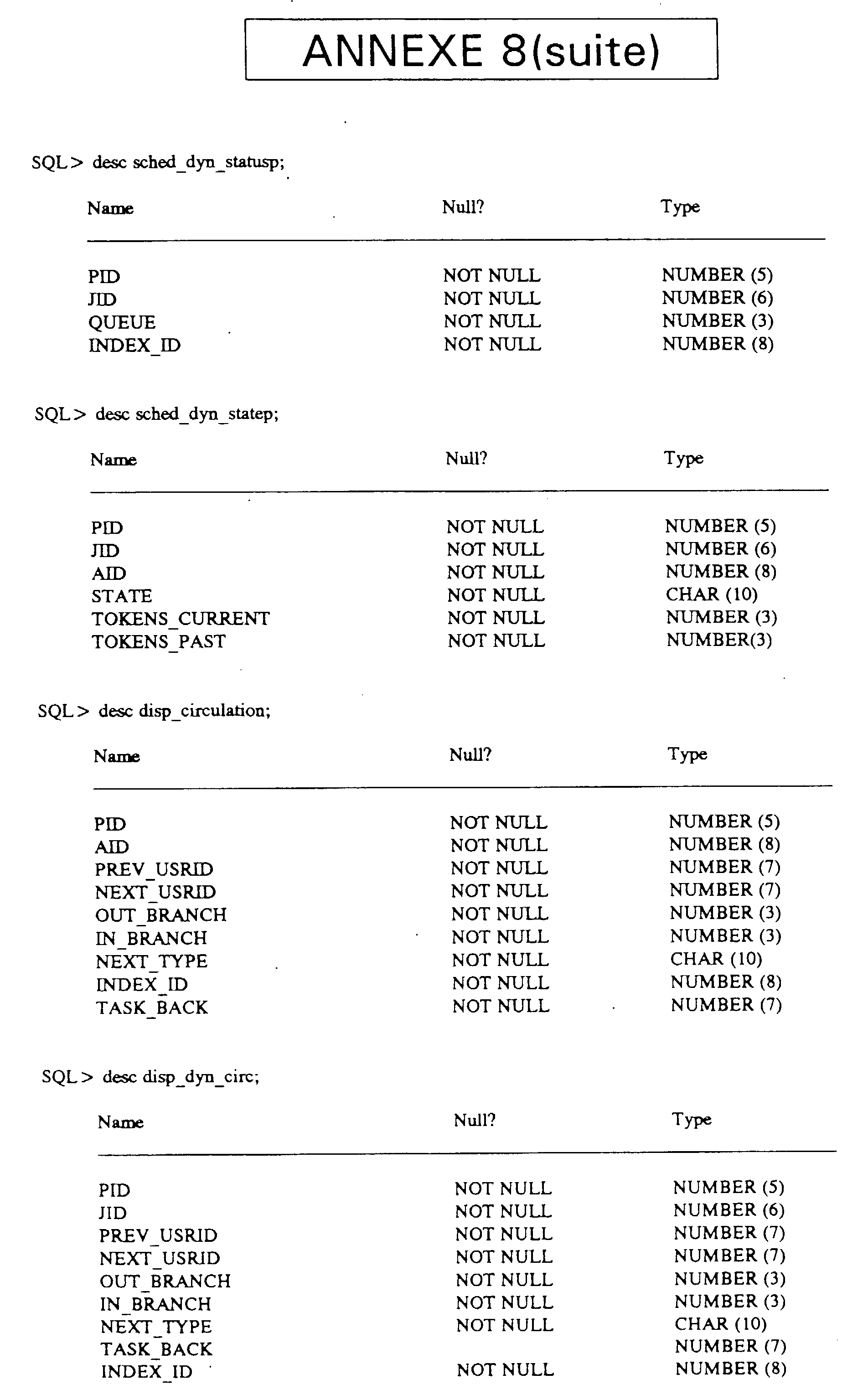

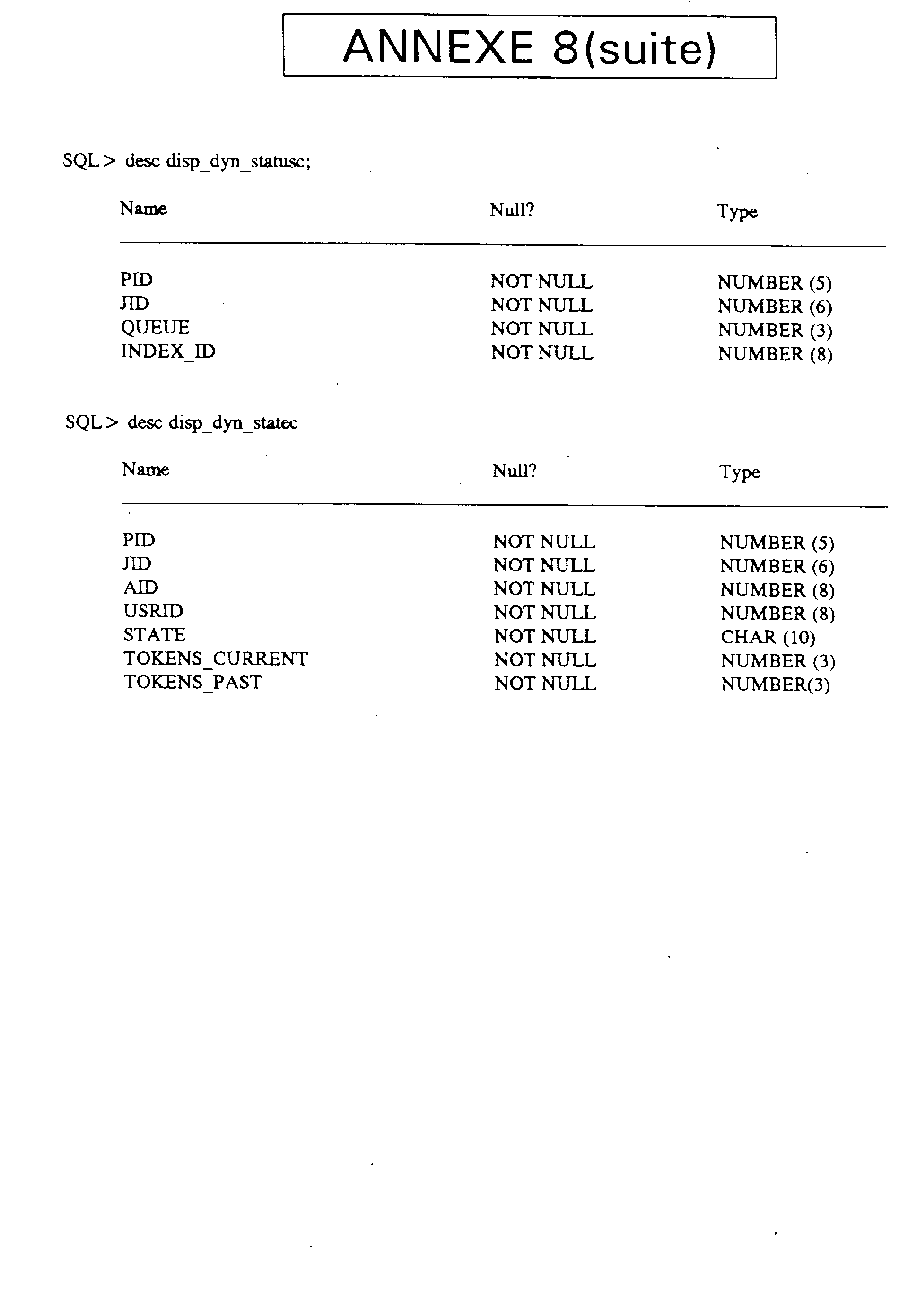

## Revendications

1. Système de traitement transactionnel entre un serveur (3) informatique et une pluralité de stations de travail (2) entre lesquelles sont exécutés les ouvrages qui correspondent à des activités constituant des procédures, le système comportant du côté serveur :
- un module administrateur (32),
- un module ordonnanceur (30) des ouvrages qui s'appuyent sur la définition des procédures (à savoir les précédences entre les activités d'une procédure) mémorisées dans une base de données relationnelle pour ordonnancer l'avancement des ouvrages en trouvant la ou les activités suivantes et en créant la ou les tâches correspondantes étant donnée la fin d'une activité,
- un module répartiteur (33) pour effectuer la répartition des tâches qui s'appuyent sur la relation entre rôle et acteur mémorisée dans la base de données relationnelle pour attribuer une tâche à un acteur choisi éventuellement selon la charge de travail,
- un module signaleur (34) pour conserver une trace des événements rythmés et recevant des informations de l'ordonnanceur (30) et d'un module coordinateur (31),
- une boîte de messages (35) échangeant des signaux d'une part avec les modules répartiteur (33) et signaleur (34), et d'autre part avec un module de communication (36) avec les stations de travail et
- un module de gestion des données du flux de travail (370),
le système comportant du côté station de travail :
- une couche de communication (27),
- une couche de gestion des messages (26) correspondant au flux de travail,
- une couche (24) comportant différents jeux d'interfaces de programmation de l'application,
- une couche de services de gestion (25) et
- une couche d'interface utilisateur (20,21).

2. Système selon la revendication 1 caractérisé en ce que les différents modules d'une couche de la station de travail (2) n'ont pas d'interaction entre eux.

3. Système selon la revendication 1 caractérisé en ce que le module de gestion des données (370) gère des tables statiques et dynamiques mémorisées dans la base de données relationnelle (372).

4. Système selon la revendication 3 caractérisé en ce que les tables statiques sont constituées des données de définition des procédures, de définition des activités, de l'organisation des acteurs et des rôles et de répartition des activités selon une table de distribution.

5. Système selon la revendication 3 caractérisé en ce que les tables dynamiques sont constituées de données évolutives représentant l'avancement des ouvrages et des tâches.

6. Système de traitement transactionnel selon la revendication 3 caractérisé en ce que les tables dynamiques sont constituées d'une table de circulation, d'une table de vecteur de données d'ouvrage JDV-JDV, d'une table de vecteur de données d'activité ADV-ADV et des tables SCHED-STATEP, SCHED-STATUSP, SCHED-JOBS, SCHED-TASKP.

7. Système de traitement transactionnel selon la revendication 4 caractérisé en ce que les tables statiques sont constituées d'une table de description de procédure SCHED-PROCEDURE, de description de données de procédure JDVPDDEF, d'une table de description des références des données stockées dans une base de données externe (EDA-ORA), d'une table de description des activités SCHED-ACTIVITE, d'une table de définition des précédences SCHED-PRECEDENCE, et des tables de définition de l'organisation du système ORGA-ACTOR, ORGA-ROLE, ORGA-R-OFF-ACT.

8. Système de traitement transactionnel selon la revendication 4 caractérisé en ce qu'une activité est constituée d'un identifieur de l'activité, de la procédure à laquelle l'activité est rattachée, et d'une liste d'actions comportant chacune une commande d'initialisation et une commande de validation.

9. Système de traitement transactionnel selon la revendication 8 caractérisé en ce que les actions sont constituées d'un type, d'un nom, des arguments constitués par les données du vecteur JDV ou ADV.

10. Système de traitement transactionnel selon la revendication 1 caractérisé en ce que la couche de service de gestion comporte :
- un service de gestion de création d'ouvrage,
- un service de gestion d'administration ,
- un service de gestion de coordination,
- un service de gestion de l'exécution de l'activité.

11. Système de traitement transactionnel selon la revendication 8 caractérisé en ce qu'une activité comporte également un préfixe (PR) destiné à appeler un logiciel de présentation et d'interaction fournissant l'interface de l'activité.

12. Système de traitement transactionnel selon la revendication 1 caractérisé en ce que le module administrateur réalise les fonctions de modelage, de création, de test et d'accord des différentes entités du système.

13. Système de traitement transactionnel selon la revendication 1 ou 12 caractérisé en ce que le module de gestion des données a pour fonction d'attacher les données appropriées aux ouvrages spécifiques en créant le vecteur JDV, de gérer l'intégrité des données, de retrouver les données et d'y accéder dans les bases de données de l'utilisateur.

14. Système de traitement transactionnel selon la revendication 1 ou 13 caractérisé en ce que le module de gestion d'exécution d'activité comporte les fonctions
- de lecture du fichier de description d'activité,
- de lecture et d'écriture des données d'ouvrage utilisées dans l'activité,
- de lecture et d'écriture des données des tâches correspondantes utilisées dans l'activité et de commande des droits d'accès sur les données d'ouvrage,
- de lancement du formulaire de présentation appropriée à l'activité et de l'exécution des actions correspondantes à l'activité d'une façon guidée.

15. Système de traitement transactionnel selon la revendication 1 ou 14 caractérisé en ce que le module de gestion de tâches exécute les fonctions suivantes :
- réception d'une tâche offerte,
- acceptation d'une tâche offerte,
- recherche des données correspondantes du vecteur d'ouvrage sur le serveur,
- achèvement d'une tâche,
- restitution du vecteur d'ouvrage mis à jour au serveur,
- réorientation d'une tâche vers un autre acteur ou une autre activité,
- appel de l'activité d'exécution d'une tâche correspondante par l'interface utilisateur,
- traitement et maintien local des données correspondant aux tâches et de leur historique.

16. Système de traitement transactionnel selon la revendication 1 ou 15 caractérisé en ce que le module administrateur (32) et coordinateur (31) comporte les fonctions d'édition de concept et de données et la commande des ouvrages.

17. Système de traitement transactionnel selon la revendication 1 ou 16 caractérisé en ce que le module répartiteur réalise trois fonctions principales :
- affecter à un utilisateur les tâches qui viennent d'être créées par l'ordonnanceur,
- affecter un nouvel utilisateur à une tâche qui vient d'être rejetée,
- effectuer la distribution et la circulation des activités parmi les utilisateurs.

18. Système de traitement transactionnel selon la revendication 1 ou 17 caractérisé en ce que le module signaleur conserve une trace des événements rythmés et comporte une fonction de rappel quand un temps est expiré et une fonction de retardement pour lancer un travail avec un retard.

19. Système de traitement transactionnel selon la revendication 1 caractérisé en ce que la boîte de message est constituée de deux tables de données, une première qui contient la description des messages et une seconde qui mémorise les destinataires des messages.

## Patentansprüche

1. System für den Dialogbetrieb zwischen einem Datenverarbeitungs-Server (3) und mehreren Arbeitsstationen (2), zwischen denen die Arbeiten ausgeführt werden, die Prozeduren bildenden Aktivitäten entsprechen, wobei das System auf seiten des Servers enthält:
- ein Management-Modul (32),
- ein Modul (30) zur Befehlsanordnung der Arbeiten, die sich auf die Definition der in einer relationalen Datenbank gespeicherten Prozeduren (d. h. der Prioritäten zwischen den Aktivitäten einer Prozedur) stützen, um den Fortschritt der Arbeiten zu ordnen, indem die folgende oder die folgenden Aktivitäten gesucht werden und indem die entsprechende oder die entsprechenden Tasks erzeugt werden, wenn eine Aktivität beendet ist,
- ein Zuteiler-Modul (33), das die Zuteilung der Tasks ausführt, die sich auf die in der relationalen Datenbank gespeicherten Beziehung zwischen Rolle und Akteur stützen, um eine Task einem Akteur zuzuweisen, der eventuell entsprechend der Arbeitsbelastung gewählt wird,
- ein Melde-Modul (34), das eine Spur der getakteten Ereignisse aufbewahrt und Informationen vom Befehlsanordnungsmodul (30) und von einem Koordinationsmodul (31) empfängt,
- einen Nachrichtenkasten (35), der Signale einerseits mit dem Zuteiler-Modul (33) und mit dem Melde-Modul (34) und andererseits mit einem Kommunikationsmodul (36) mit den Arbeitsstationen austauscht, und
- ein Modul (370) zum Steuern des Arbeitsdatenflusses,
wobei das System auf seiten der Arbeitsstation enthält:
- eine Kommunikationsschicht (27),
- eine Schicht zum Steuern der dem Arbeitsfluß entsprechenden Nachrichten (26),
- eine Schicht (24), die verschiedene Gruppen von Anwendungs-Programmierschnittstellen enthält,
- eine Steuerungsdienste-Schicht (25) und
- eine Anwenderschnittstellen-Schicht (20, 21).

2. System nach Anspruch 1, dadurch gekennzeichnet, daß die verschiedenen Module einer Schicht der Arbeitsstation (2) nicht miteinander in Wechselwirkung sind.

3. System nach Anspruch 1, dadurch gekennzeichnet, daß das Datensteuerung-Modul (370) die in der relationalen Datenbank (372) gespeicherten statischen und dynamischen Tabellen steuert.

4. System nach Anspruch 3, dadurch gekennzeichnet, daß die statischen Tabellen aus Daten zur Definition der Prozeduren, zur Definition der Aktivitäten, zur Organisation der Akteure und der Rollen und zur Zuteilung der Aktivitäten entsprechend einer Verteilungstabelle gebildet sind.

5. System nach Anspruch 3, dadurch gekennzeichnet, daß die dynamischen Tabellen aus sich entwickelnden Daten gebildet sind, die den Fortschritt der Arbeiten und der Tasks repräsentieren.

6. Dialogbetrieb-System nach Anspruch 3, dadurch gekennzeichnet, daß die dynamischen Tabellen aus einer Zirkulationstabelle, einer Arbeits-Datenvektor-Tabelle (JDV-JDV), einer Aktivitäts-Datenvektor-Tabelle (ADV-ADV) und Tabellen SCHED-STATEP, SCHED-STATUSP, SCHED-JOBS, SCHED-TASKP gebildet sind.

7. Dialogbetrieb-System nach Anspruch 4, dadurch gekennzeichnet, daß die statischen Tabellen aus SCHED-PROCEDURE zur Prozedurbeschreibung, einer Tabelle JDVPDDEF zur Prozedurdaten-Beschreibung, aus einer Tabelle (EDA-ORA) zur Beschreibung von Bezugnahmen auf Daten, die in einer externen Datenbank gespeichert sind, aus einer Tabelle SCHED-ACTIVITE zur Beschreibung der Aktivitäten, aus einer Tabelle SCHED-PRECEDENCE zur Definition der Prioritäten und aus Tabellen ORGA-ACTOR, ORGA-ROLE, ORGA-R-OFF-ACT zur Definition der Organisation des Systems gebildet sind.

8. Dialogbetrieb-System nach Anspruch 4, dadurch gekennzeichnet, daß eine Aktivität aus einem Identifizierer der Aktivität, aus der Prozedur, mit der die Aktivität verknüpft ist, und aus einer Liste von Aktionen, die jeweils einen Initialisierungsbefehl und einen Validierungsbefehl enthalten, gebildet ist.

9. Dialogbetrieb-System nach Anspruch 8, dadurch gekennzeichnet, daß die Aktionen aus einem Typ, aus einem Namen und aus Argumenten gebildet sind, die durch die Daten des Vektors JDV oder ADV gebildet sind.

10. Dialogbetrieb-System nach Anspruch 1, dadurch gekennzeichnet, daß die Steuerungsdienst-Schicht enthält:
- einen Arbeitserzeugungs-Steuerungsdienst,
- einen Management-Steuerungsdienst,
- einen Koordinations-Steuerungsdienst,
- einen Aktivitätsausführungs-Steuerungsdienst.

11. Dialogbetrieb-System nach Anspruch 8, dadurch gekennzeichnet, daß eine Aktivität außerdem ein Präfix (PR) enthält, das dazu bestimmt ist, eine Präsentations- und Wechselwirkungs-Software aufzurufen, die die Schnittstelle der Aktivität liefert.

12. Dialogberieb-System nach Anspruch 1, dadurch gekennzeichnet, daß das Management-Modul die Funktionen der Planung, der Erzeugung, der Prüfung und der Abstimmung der verschiedenen Einheiten des Systems ausführt.

13. Dialogbetrieb-System nach Anspruch 1 oder 12, dadurch gekennzeichnet, daß das Daten-Steuerungsmodul die Aufgaben hat, die geeigneten Daten mit den spezifischen Arbeiten zu verbinden, indem der Vektor JDV erzeugt wird, die Integrität der Daten zu steuern, die Daten wiederzugewinnen und darauf in den Datenbanken des Anwenders zuzugreifen.

14. Dialogbetrieb-System nach Anspruch 1 oder 13, dadurch gekennzeichnet, daß das Steuermodul zur Ausführung der Aktivität die folgenden Funktionen enthält:
- Lesen der Aktivitätsbeschreibungsdatei,
- Lesen und Schreiben von Arbeitsdaten, die in der Aktivität verwendet werden,
- Lesen und Schreiben der Daten der entsprechenden Tasks, die in der Aktivität verwendet werden, und Steuern der Rechte des Zugriffs auf die Arbeitsdaten,
- Starten des Formulars der für die Aktivität geeigneten Präsentation und der Ausführung der der Aktivität entsprechenden Aktionen in geführter Weise.

15. Dialogbetrieb-System nach Anspruch 1 oder 14, dadurch gekennzeichnet, daß das Task-Steuermodul die folgenden Funktionen ausführt:
- Empfang einer angebotenen Task,
- Annahme einer angebotenen Task,
- Suchen der entsprechenden Daten des Arbeitsvektors im Server,
- Beenden einer Task,
- Wiederherstellen des aktualisierten Arbeitsvektors im Server,
- Umleiten einer Task zu einem anderen Akteur oder einer anderen Aktivität,
- Aufrufen der Aktivität zur Ausführung einer entsprechenden Task durch die Anwenderschnittstelle,
- lokales Verarbeiten und Halten der den Tasks entsprechenden Daten und ihrer Historie.

16. Dialogbetrieb-System nach Anspruch 1 oder 15, dadurch gekennzeichnet, daß das Management-Modul (32) und das Koordinations-Modul (31) die Funktionen der Konzept- und Datenaufbereitung und der Steuerung der Arbeiten enthalten.

17. Dialogbetrieb-System nach Anspruch 1 oder 16, dadurch gekennzeichnet, daß das Zuteiler-Modul die drei folgenden Hauptfunktionen ausführt:
- Zuweisen der vom Befehlsanordnungsmodul eben erzeugten Tasks an einen Anwender,
- Zuweisen eines neuen Anwenders an eine eben zurückgewiesene Task,
- Ausführen der Verteilen und der Zirkulation der Aktivitäten unter den Anwendern.

18. Dialogbetrieb-System nach Anspruch 1 oder 17, dadurch gekennzeichnet, daß das Melde-Modul eine Spur der getakteten Ereignisse aufbewahrt und eine Erinnerungsfunktion, wenn eine Zeit verstrichen ist, sowie eine Verzögerungsfunktion zum Starten einer Arbeit mit einer Verzögerung enthält.

19. Dialogbetrieb-System nach Anspruch 1, dadurch gekennzeichnet, daß der Nachrichtenkasten aus zwei Datentabellen gebildet ist, einer ersten, die die Beschreibung der Nachrichten enthält, und einer zweiten, die die Ziele der Nachrichten speichert.

## Claims

1. Transactional processing system between a computer server (3) and a plurality of work stations (2) between which jobs are run corresponding to activities constituting procedures, the system comprising, on the server side:
- an administrator module (32),
- a scheduler module (30) for jobs that rely on the definition of the procedures (i.e. the precedences between the activities of a procedure) stored in a relational database so as to schedule the progress of the jobs by finding the following activity or activities and by creating the corresponding task or tasks, given the end of an activity,
- a dispatcher module (33) for carrying out the dispatching of tasks that rely on the relation between rôle and actor stored in the relational database so as to allocate a task to a selected actor, if necessary, in accordance with the work load,
- a notifier module (34) for keeping track of timed events and receiving items of information from the scheduler module (30) and from a co-ordinator module (31),
- a message box (35) exchanging signals on the one hand with the dispatcher module (33) and the notifier module (34), and on the other hand with a module for communicating (36) with the work stations and
- a work flow data management module (370),
the system comprising, on the work station side:
- a communication layer (27),
- a message management layer (26) corresponding to the work flow,
- a layer (24) comprising different sets of application programming interfaces,
- a management services layer (25) and
- a user interface layer (20, 21).

2. System according to Claim 1, characterised in that the different modules of a work station layer (2) do not interact with each other.

3. System according to Claim 1, characterised in that the data management module (370) manages static and dynamic tables stored in the relational database (372).

4. System according to Claim 3, characterised in that the static tables are constituted by the data for defining the procedures, for defining the activities, for organising the actors and the roles, and for dispatching the activities in accordance with a distribution table.

5. System according to Claim 3, characterised in that the dynamic tables are constituted by data subject to alteration representing the progress of the jobs and the tasks.

6. Transactional processing system according to Claim 3, characterised in that the dynamic tables are constituted by a flow table, by a job data vector table JDV-JDV, by an activity data vector table ADV-ADV and by tables SCHED-STATEP, SCHED-STATUSP, SCHED-JOBS, SCHED-TASKP.

7. Transactional processing system according to Claim 4, characterised in that the static tables are constituted by a procedure description table SCHED-PROCEDURE, by a procedure data description table JDVPDDEF, by a table describing the references of the data stored in an external database (EDA-ORA), by a table describing activities SCHED-ACTIVITY, by a table defining precedences SCHED-PRECEDENCE and by tables defining the organisation of the system ORGA-ACTOR, ORGA-ROLE, ORGA-R-OFF-ACT.

8. Transactional processing system according to Claim 4, characterised in that an activity is constituted by an identifier of the activity, by the procedure to which the activity is attached and by a list of actions each comprising an initialisation command and a validation command.

9. Transactional processing system according to Claim 8, characterised in that the actions are constituted by a type, by a name, by arguments constituted by the data of the vector JDV or ADV.

10. Transactional processing system according to Claim 1, characterised in that the management service layer comprises:
- a job creation management service,
- an administration management service,
- a co-ordination management service,
- a management service for executing the activity.

11. Transactional processing system according to Claim 8, characterised in that an activity also comprises a prefix (PR) for calling presentation and interaction software providing the interface of the activity.

12. Transactional processing system according to Claim 1, characterised in that the administrator module carries out the functions for modelling, creating, testing and tuning the different entities of the system.

13. Transactional processing system according to Claim 1 or 12, characterised in that the data management module has the function of attaching the appropriate data to the specific jobs by creating the JDV vector, of managing the integrity of the data, of finding the data and of accessing them in the databases of the user.

14. Transactional processing system according to Claim 1 or 13, characterised in that the activity execution management module comprises the functions
- of reading the activity description file,
- of reading and writing the job data used in the activity,
- of reading and writing the data of the corresponding tasks used in the activity and of controlling the access rights to the job data,
- of launching the presentation form appropriate to the activity and of executing the actions corresponding to the activity in a guided manner.

15. Transactional processing system according to the Claim 1 or 14, characterised in that the task management module executes the following functions:
- receiving a task offered,
- accepting a task offered,
- searching for the corresponding data of the job vector on the server,
- completing a task,
- restoring the updated job vector to the server,
- redirecting a task towards another actor or another activity,
- calling the execution activity of a corresponding task via the user interface,
- processing and locally maintaining the data corresponding to the tasks and their history.

16. Transactional processing system according to Claim 1 or 15, characterised in that the administrator (32) and co-ordinator (31) module comprises the data and concept editing functions and the job control.

17. Transactional processing system according to Claim 1 or 16, characterised in that the dispatcher module carries out three main functions:
- to assign to a user the tasks that have just been created by the scheduler module;
- to assign a new user to a task that has just been rejected;
- to distribute and circulate the activities among the users.

18. Transactional processing system according to Claim 1 or 17, characterised in that the notifier module keeps track of the timed events and comprises a reminder function when a period has expired and a delay function to launch work with a delay.

19. Transactional processing system according to Claim 1, characterised in that the message box is constituted by two data tables, a first one containing the description of the messages and a second one storing the addressees of the messages.
